(19) Europäisches Patentamt
European Patent Office
Office européen des brevets

(11) EP 4 364 861 A1

(12) # EUROPEAN PATENT APPLICATION
published in accordance with Art. 153(4) EPC

(43) Date of publication:
**08.05.2024 Bulletin 2024/19**

(21) Application number: **22832912.4**

(22) Date of filing: **20.06.2022**

(51) International Patent Classification (IPC):
***B05D 1/36*** *(2006.01)* ***C08F 290/06*** *(2006.01)*
***C09D 123/02*** *(2006.01)* ***C09D 133/14*** *(2006.01)*

(52) Cooperative Patent Classification (CPC):
**B05D 1/36; C08F 290/06; C09D 123/02; C09D 133/14**

(86) International application number:
**PCT/JP2022/024592**

(87) International publication number:
**WO 2023/276764 (05.01.2023 Gazette 2023/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.07.2021 JP 2021111055**

(71) Applicant: **Kansai Paint Co., Ltd**
**Amagasaki-shi, Hyogo 661-8555 (JP)**

(72) Inventors:
- **HONDA, Takumu**
  **Miyoshi-shi, Aichi 470-0206 (JP)**
- **OHNO, Keita**
  **Miyoshi-shi, Aichi 470-0206 (JP)**
- **ONO, Takayuki**
  **Miyoshi-shi, Aichi 470-0206 (JP)**

(74) Representative: **Gill Jennings & Every LLP**
**The Broadgate Tower**
**20 Primrose Street**
**London EC2A 2ES (GB)**

(54) **AQUEOUS COATING MATERIAL COMPOSITION AND COATED ARTICLE USING SAME, AND MULTILAYER COATING FILM FORMING METHOD**

(57) Provided is an aqueous coating composition excelling in washability of a coating machine used for coating. The aqueous coating composition containing an aqueous polyolefin-based resin (A) and an acrylic resin (B) having an anionic group and a polyoxyalkylene group is disclosed, which is used in a coating process including (1) applying an aqueous coating composition onto an object to be coated using a coating machine and (2) washing the coating machine using alkaline washing water having a pH of 9.5 or more.

EP 4 364 861 A1

## Description

### Technical Field

The present invention relates to an aqueous coating composition, a coated article using the same, and a method of forming a multilayer coating film.

### Background Art

Plastic molded articles of a polyolefin or the like are widely used as members of automobile outer panel portions, home appliances, and the like. These molded articles are often coated in advance with a primer containing a chlorinated polyolefin or the like to improve adhesion between a topcoat film and the molded articles. For this primer, an aromatic organic solvent such as toluene or xylene is used from the viewpoint of solubility of the chlorinated polyolefin or the like. However, in recent years, use of an aqueous primer is promoted from the viewpoint of safety and hygiene, environmental protection, and the like.

As the aqueous primer, for example, Patent Documents 1 and 2 propose a composition containing at least one aqueous resin selected from an aqueous polyolefin-based resin, an aqueous polyurethane resin, and an aqueous acrylic resin, and a crosslinking agent at specific proportions for the purpose of forming a coating film excellent in adhesion to a plastic molded article of a polyolefin or the like.

Patent Documents 3 and 4 describe that when an aqueous coating composition having a specific composition containing an aqueous dispersion of a modified polyolefin is used as an aqueous primer, a multilayer coating film excelling in a finishing property, water resistance, and the like can be formed even when top coating is performed by sequentially applying a color base paint and a clear paint on a primer coating film formed by the aqueous primer.

On the other hand, in recent years, from the viewpoint of reducing waste paint and improving finished appearance, it is investigated to use a coating machine excelling in coating efficiency and atomization, such as a rotary atomization type coating machine, in the application of the aqueous primer. The coating machine is generally large and occupies a large space in a coating booth, and thus the same coating machine may be used while switching between an aqueous paint and an organic solvent-based paint. For example, when the aqueous paint is switched to the organic solvent-based paint, the coating machine is washed after applying the aqueous paint to remove the aqueous paint remaining on the coating machine, and then the organic solvent-based paint is applied. If the aqueous paint remains on the coating machine at the time of washing, when the organic solvent-based paint is applied, the remaining aqueous paint is mixed into the organic solvent-based paint, and a coating film defect called seediness is generated. To prevent this problem, there is recently a demand for an aqueous primer paint excelling in washability of a coating machine.

### Citation List

### Patent Literature

Patent Document 1: WO 2007/066827
Patent Document 2: JP 2007-302709 A
Patent Document 3: WO 2013/191104
Patent Document 4: WO 2016/121242

## Summary of Invention

### Technical Problem

However, when an aqueous coating composition in the related art is used as an aqueous primer composition, washability of a coating machine may be insufficient.

The present invention is directed to providing an aqueous coating composition which can be used as an aqueous primer composition for an object to be coated such as a plastic substrate and are excellent in washability of a coating machine used for coating, and providing a coated article using the same and a method of forming a multilayer coating film.

### Solution to Problem

As a result of intensive studies to solve the above problem, the present inventors have found that the above-described problem can be solved by using a specific aqueous coating composition as an aqueous coating composition used in a coating process including applying the aqueous coating composition onto an object to be coated using a coating machine and washing the coating machine with alkaline washing water having a pH of 9.5 or more. Thus, the present invention is achieved.

That is, the present invention relates to an aqueous coating composition for use in a coating process including

(1) applying the aqueous coating composition onto an object to be coated using a coating machine, and
(2) washing the coating machine using alkaline washing water having a pH of 9.5 or more,

where the aqueous coating composition includes: an aqueous polyolefin-based resin (A); and an acrylic resin (B) having an anionic group and a polyoxyalkylene group, and to a coated article using the same and a method of forming a multilayer coating film.

Advantageous Effects of Invention

The aqueous coating composition of the present invention has an effect of being excellent in washability of a coating machine used for coating.

Description of Embodiments

The aqueous coating composition of the present invention contains an aqueous polyolefin-based resin (A) and an acrylic resin (B) having an anionic group and a polyoxyalkylene group.

Aqueous Polyolefin-based Resin (A)

The aqueous polyolefin-based resin (A) used in the present invention has a polyolefin molecule as a main skeleton, into which a hydrophilic group such as a carboxyl group is introduced, and usually, a polyolefin (a) modified with an unsaturated carboxylic acid or an acid anhydride is suitable.

The unsaturated carboxylic acid- or acid anhydride-modified polyolefin (a) is obtained, for example, by grafting a polyolefin obtained by (co)polymerizing at least one olefin selected from olefins having 2 to 10 carbon atoms such as ethylene, propylene, butylene, and hexene with an unsaturated carboxylic acid, such as (meth)acrylic acid, maleic acid, fumaric acid, and itaconic acid, or an acid anhydride thereof in accordance with a method known per se. In particular, those modified with maleic acid or an acid anhydride thereof are suitable. The amount of polyolefin grafted with the unsaturated carboxylic acid or the acid anhydride thereof is not strictly limited and can be varied depending on physical properties desired for a coating film formed, for example, and is generally from 1 to 20 mass%, preferably from 1.5 to 15 mass%, and more preferably from 2 to 10 mass% based on a solid content mass of the polyolefin.

As the polyolefin used for the unsaturated carboxylic acid- or acid anhydride-modified polyolefin (a), a known polyolefin can be used without particular limitation, and a polyolefin produced using a single-site catalyst as a polymerization catalyst is particularly suitable from the viewpoint that the resulting polyolefin has a narrow molecular weight distribution and is excellent in random copolymerizability and the like. The single-site catalyst has active sites of the same species (single site), and among the single-site catalysts, a metallocene-based catalyst is particularly preferable. The metallocene-based catalyst is usually obtained by combining a metallocene (a bis(cyclopentadienyl) metal complex and a derivative thereof) which is a compound having at least one conjugated five-membered ring ligand and containing a transition metal compound of Groups 4 to 6 or 8 or a rare earth transition metal of Group 3 in the periodic table, a cocatalyst such as aluminoxane capable of activating the metallocene, and an organoaluminum compound such as trimethylaluminum.

The polyolefin can be produced by a method known per se, for example, by continuously adding an alkyl aluminum and a metallocene-based catalyst while supplying an olefin such as propylene or ethylene and hydrogen to a reaction vessel.

As needed, the unsaturated carboxylic acid- or acid anhydride-modified polyolefin (a) may be further acrylic-modified. Examples of the polymerizable unsaturated monomer used for the acrylic modification include alkyl esters of (meth)acrylic acid such as methyl (meth)acrylate, ethyl (meth)acrylate, propyl (meth)acrylate, butyl (meth)acrylate, hexyl (meth)acrylate, cyclohexyl (meth)acrylate, 2-ethylhexyl (meth)acrylate, lauryl (meth)acrylate, and stearyl (meth)acrylate; acrylic-based monomers such as (meth)acrylic acid, glycidyl (meth)acrylate, 2-hydroxyethyl (meth)acrylate, (meth)acrylamide, and (meth)acrylonitrile; and styrene, and these may be used alone or in combination of two or more types.

Note that in the present specification, "(meth)acryl" means "acryl or methacryl", "(meth)acrylate" means "acrylate or methacrylate", "(meth)acryloyl" means "acryloyl or methacryloyl", and "(meth)acrylonitrile" means "acrylonitrile or

methacrylonitrile".

Examples of the acrylic modification method include a method in which a polymerizable unsaturated monomer reactive with a carboxyl group in the unsaturated carboxylic acid- or acid anhydride-modified polyolefin, such as glycidyl (meth)acrylate, is first reacted to introduce a polymerizable unsaturated group, and then at least one type of other polymerizable unsaturated monomers is copolymerized with the unsaturated carboxylic acid- or acid anhydride-modified polyolefin with the polymerizable unsaturated group introduced. An amount of the polymerizable unsaturated monomer used in a case of acrylic modification is desirably in a range of 30 mass% or less, particularly from 0.1 to 20 mass%, and more particularly from 0.15 to 15 mass% based on the solid content mass of the resulting modified polyolefin (a), from the viewpoint of compatibility with other components and adhesion of a coating film formed.

The unsaturated carboxylic acid- or acid anhydride-modified polyolefin (a) may be modified with a compound containing a polyoxyalkylene chain, as desired, from the viewpoint of water resistance, finished property, gasohol resistance, and the like of the coating film formed. Examples of the polyoxyalkylene chain in the compound containing a polyoxyalkylene chain include a polyoxyethylene chain, a polyoxypropylene chain, and a block chain of polyoxyethylene and polyoxypropylene.

The compound containing a polyoxyalkylene chain suitably has a number average molecular weight in a range of usually 400 to 3000, and preferably 500 to 2000. When the number average molecular weight is less than 400, there is a possibility that the effect of a hydrophilic group cannot be sufficiently exhibited, and the coating film performance (particularly, water resistance) may be adversely affected. On the other hand, when the number average molecular weight is more than 3000, solidification may occur at room temperature to deteriorate solubility, leading to difficult handling.

The unsaturated carboxylic acid- or acid anhydride-modified polyolefin (a) may be further chlorinated as needed. The chlorination of the polyolefin can be carried out, for example, by blowing chlorine gas into an organic solvent solution or dispersion of the polyolefin or a modified product thereof, and the reaction temperature can be in a range of 50 to 120°C. A chlorine content in the chlorinated polyolefin (solid content) can be varied depending on physical properties desired for the chlorinated polyolefin, for example, and from the viewpoint of adhesion of the coating film formed, the chlorine content is desirably in a range of generally 35 mass% or less, particularly 10 to 30 mass%, and more particularly 12 to 25 mass%, based on the mass of the chlorinated polyolefin.

The polyolefin used for the unsaturated carboxylic acid- or acid anhydride-modified polyolefin (a) is particularly preferably a polyolefin containing propylene as a polymerization unit, and a mass fraction of propylene in the unsaturated carboxylic acid- or acid anhydride-modified polyolefin (a) is suitably in a range of usually 0.5 to 0.99, and particularly 0.7 to 0.95, from the viewpoint of compatibility with other components and adhesion of the coating film formed.

The unsaturated carboxylic acid- or acid anhydride-modified polyolefin (a) obtained as described above can have a melting point in a range of 120°C or lower, preferably 50 to 110°C, and more preferably 60 to 100°C, and a weight average molecular weight (Mw) in a range of 30000 to 180000, preferably 50000 to 180000, and more preferably 70000 to 180000. It is preferable that the melting point and the weight average molecular weight of the modified polyolefin are within these ranges, from the viewpoint of adhesiveness of the formed coating film to the polyolefin substrate, production stability of the modified polyolefin, and the like.

Here, the melting point is determined using a differential scanning calorimeter "DSC-5200" (trade name, available from Seiko Instruments Inc.) by heating 20 mg of the modified polyolefin from -100°C to 150°C at a temperature increase rate of 10°C/min and measuring a heat quantity thereof. The melting point of the modified polyolefin (a) can be adjusted by changing the composition of the polyolefin, particularly an amount of an $\alpha$-olefin monomer.

In the present specification, the weight average molecular weight or number average molecular weight is a value obtained by converting a weight average molecular weight or number average molecular weight measured by gel permeation chromatography based on the weight average molecular weight or number average molecular weight of standard polystyrene. Specifically, the weight average molecular weight or number average molecular weight of the aqueous polyolefin-based resin (A) is measured by "HLC/GPC150C" (available from Water Co., Ltd., trade name, 60 cm $\times$ 1) at a column temperature of 135°C using o-dichlorobenzene as a solvent at a flow rate of 1.0 ml/min. An injection sample is prepared by dissolution at 140°C for 1 to 3 hours to give a solution concentration of 5 mg of the polyolefin in 3.4 ml of o-dichlorobenzene. Note that examples of a column used for gel permeation chromatography include "GMHHR-H(S)HT" (trade name, available from Tosoh Corporation).

The number average molecular weight or weight average molecular weight of a resin other than the aqueous polyolefin-based resin (A) can be measured using, as a gel permeation chromatograph, "HLC-8120GPC" (trade name, available from Tosoh Corporation), using, as columns, four columns, namely "TSKgel G4000HXL", "TSKgel G3000HXL", "TSKgel G2500HXL", and "TSKgel G2000HXI," (trade names, all available from Tosoh Corporation), and using, as a detector, a differential refractometer under conditions of tetrahydrofuran as a mobile phase at a measurement temperature of 40°C, and a flow rate of 1 mL/min.

The aqueous polyolefin-based resin (A) obtained as described above can be obtained as an aqueous dispersion by, for example, dispersing the unsaturated carboxylic acid- or acid anhydride-modified polyolefin (a) in an aqueous medium, and at this time, as needed, water dispersion can be performed by neutralizing a part or all of carboxyl groups

in the unsaturated carboxylic acid- or acid anhydride-modified polyolefin (a) with an amine compound, and/or using an emulsifier. In a case where the modified polyolefin (a) contains a polyoxyalkylene chain, it is possible to disperse the modified polyolefin (a) in an aqueous medium using neither amine compound nor emulsifier, or using only a small amount thereof.

Examples of the amine compound include: tertiary amines such as triethylamine, tributylamine, dimethylethanolamine, and triethanolamine; secondary amines such as diethylamine, dibutylamine, diethanolamine, and morpholine; and primary amines such as propylamine and ethanolamine.

In a case where the amine compound is used, the used amount thereof is preferably in a range of usually 0.1 to 1.0 mol per 1 mol of carboxyl groups in the unsaturated carboxylic acid- or acid anhydride-modified polyolefin (a).

Examples of the emulsifier include: nonionic emulsifiers such as polyoxyethylene monooleyl ether, polyoxyethylene monostearyl ether, polyoxyethylene monolauryl ether, polyoxyethylene tridecyl ether, polyoxyethylene phenyl ether, polyoxyethylene nonylphenyl ether, polyoxyethylene octylphenyl ether, polyoxyethylene monolaurate, polyoxyethylene monostearate, polyoxyethylene monooleate, sorbitan monolaurate, sorbitan monostearate, sorbitan monostearate, sorbitan trioleate, and polyoxyethylene sorbitan monolaurate; and anionic emulsifiers such as sodium salts and ammonium salts of alkylsulfonic acid, alkylbenzenesulfonic acid, and alkylphosphoric acid. Furthermore, a polyoxyalkylene group-containing anionic emulsifier having, per molecule, an anionic group and a polyoxyalkylene group such as a polyoxyethylene group or a polyoxypropylene group, a reactive anionic emulsifier having, per molecule, the anionic group and a polymerizable unsaturated group, or the like may be used. These can be used alone or in combination of two or more types.

An amount of the emulsifier used is desirably in a range of usually 30 parts by mass or less, and particularly 0.5 to 25 parts by mass, per 100 parts by mass of the solid content of the unsaturated carboxylic acid- or acid anhydride-modified polyolefin (a).

A solid content of the aqueous polyolefin-based resin (A) in the aqueous coating composition of the present invention is preferably in a range of 10 to 45 parts by mass, more preferably in a range of 15 to 40 parts by mass, and even more preferably in a range of 20 to 35 parts by mass, based on 100 parts by mass of a resin solid content in the aqueous coating composition, from the viewpoint of the finished property, adhesiveness to the substrate, and the like of the coating film formed.

Note that in the present specification, the "solid content" refers to nonvolatile components such as a resin, a curing agent, and a pigment remaining after drying at 110°C for 1 hour. The solid content can be determined, for example, by weighing a sample in a heat-resistant container such as an aluminum foil cup, spreading the sample on the bottom surface of the container, then drying the sample at 110°C for 1 hour, and weighing the mass of the components remaining after drying. The "resin solid content in the aqueous coating composition" of the present invention includes resin solid contents of the aqueous polyolefin-based resin (A) and the acrylic resin (B) having an anionic group and a polyoxyalkylene group, and a solid content of the coating film-forming resin components such as another resin and a crosslinking agent which are added and blended as needed.

In addition, in the present specification, the "solid content concentration" refers to a content mass ratio of the solid content in a composition. Thus, the solid content concentration of the composition can be calculated, for example, by weighing the composition into a heat-resistant container such as an aluminum foil cup, spreading the composition on the bottom surface of the container, then drying the composition at 110°C for 1 hour, weighing the mass of the components in the composition remaining after drying, and determining a ratio of the mass of the components remaining after drying to the total mass of the composition before drying.

Acrylic Resin (B) Having Anionic Group and Polyoxyalkylene Group

The aqueous coating composition of the present invention contains the acrylic resin (B) having an anionic group and a polyoxyalkylene group.

Examples of the anionic group contained in the acrylic resin (B) include an acidic group. Examples of the acidic group include a carboxyl group, a sulfonate group, a phosphate group, and a phenolic hydroxyl group. These may be neutralized with a base such as amine. The acidic group is preferably a carboxyl group from the viewpoint of water resistance and the like of the coating film formed.

Examples of the polyoxyalkylene group contained in the acrylic resin (B) include a polyoxyethylene group, a polyoxypropylene group, a polyoxybutylene group, and an arbitrary combination thereof such as a polyoxyethylene(oxypropylene) group. Particularly, the acrylic resin (B) preferably has a polyoxyethylene group from the viewpoint of the finished property of the coating film formed, washability of the coating machine, and the like.

A method for producing the acrylic resin (B) having an anionic group and a polyoxyalkylene group is not particularly limited, and the acrylic resin (B) can be produced, for example, by polymerizing polymerizable unsaturated monomers having an anionic group and/or polyoxyalkylene group with another polymerizable unsaturated monomer as needed by a method known per se, such as a solution polymerization method in an organic solvent or an emulsion

polymerization method in water. Suitably, the acrylic resin (B) having an anionic group and a polyoxyalkylene group can be produced as a copolymer obtained by copolymerizing a polymerizable unsaturated monomer mixture containing a polymerizable unsaturated monomer (b 1) having an anionic group and a polymerizable unsaturated monomer (b2) having a polyoxyalkylene group.

Examples of the polymerizable unsaturated monomer (b 1) having an anionic group include: carboxyl group-containing polymerizable unsaturated monomers such as (meth)acrylic acid, crotonic acid, maleic acid, fumaric acid, itaconic acid, and half-monoalkyl esterified products of dicarboxylic acid among these; sulfonate group-containing polymerizable unsaturated monomers such as sulfoalkyl (meth)acrylate such as 2-acrylamido-2-methylpropane sulfonic acid and 2-sulfoethyl (meth)acrylate; and phosphate group-containing polymerizable unsaturated monomers such as 2-acryloyloxyethyl acid phosphate, 2-methacryloyloxyethyl acid phosphate, 2-acryloyloxypropyl acid phosphate, and 2-methacryloyloxypropyl acid phosphate.

Examples of the polymerizable unsaturated monomer (b2) having a polyoxyalkylene group include polyoxyalkylene chain-containing polymerizable unsaturated monomers such as polyethylene glycol (meth)acrylate, polypropylene glycol (meth)acrylate, methoxypolyethylene glycol (meth)acrylate, and ethoxypolyethylene glycol (meth)acrylate.

In the production of the acrylic resin (B) having an anionic group and a polyoxyalkylene group, the polymerizable unsaturated monomer having an anionic group and/or a polyoxyalkylene group and another polymerizable unsaturated monomer (b3) may be copolymerized. In this case, the acrylic resin (B) having an anionic group and a polyoxyalkylene group can be produced as a copolymer containing the polymerizable unsaturated monomer (b 1) having an anionic group, the polymerizable unsaturated monomer (b2) having a polyoxyalkylene group, and the other polymerizable unsaturated monomer (b3) as copolymerizable monomer components.

Examples of the other polymerizable unsaturated monomer (b3) include the following.

(i) Alkyl or cycloalkyl (meth)acrylates: such as methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-hexyl (meth)acrylate, n-octyl (meth)acrylate, 2-ethylhexyl (meth)acrylate, nonyl (meth)acrylate, dodecyl (meth)acrylate, tridecyl (meth)acrylate, stearyl (meth)acrylate, isostearyl (meth)acrylate, cyclohexyl (meth)acrylate, methylcyclohexyl (meth)acrylate, tert-butylcyclohexyl (meth)acrylate, cyclododecyl (meth)acrylate, and tricyclodecanyl (meth)acrylate.

(ii) Polymerizable unsaturated monomers having an isobornyl group: such as isobornyl (meth)acrylate.

(iii) Hydroxyl group-containing polymerizable unsaturated monomers: such as monoesterified products of a (meth)acrylic acid and a dihydric alcohol having 2 to 8 carbon atoms, such as 2-hydroxyethyl (meth)acrylate, 2-hydroxypropyl (meth)acrylate, 3-hydroxypropyl (meth)acrylate, and 4-hydroxybutyl (meth)acrylate; ε-caprolactone modified products of the monoesterified products of a (meth)acrylic acid and a dihydric alcohol having 2 to 8 carbon atoms; N-hydroxymethyl (meth)acrylamide; and allyl alcohol.

(iv) Polymerizable unsaturated monomers having an adamantyl group: such as adamantyl (meth)acrylate.

(v) Polymerizable unsaturated monomers having a tricyclodecenyl group: such as tricyclodecenyl (meth)acrylate.

(vi) Aromatic ring-containing polymerizable unsaturated monomers: such as benzyl (meth)acrylate, styrene, α-methylstyrene, and vinyl toluene.

(vii) Polymerizable unsaturated monomers having an alkoxysilyl group: such as vinyltrimethoxysilane, vinyltriethoxysilane, vinyltris(2-methoxyethoxy)silane, γ-(meth)acryloyloxypropyltrimethoxysilane, and γ-(meth)acryloyloxypropyltriethoxysilane.

(viii) Polymerizable unsaturated monomers having a fluorinated alkyl group: such as perfluoroalkyl (meth)acrylates such as perfluorobutylethyl (meth)acrylate and perfluorooctylethyl (meth)acrylate; and fluoroolefins.

(ix) Polymerizable unsaturated monomers having a photopolymerizable functional group such as a maleimide group.

(x) Vinyl compounds: such as N-vinylpyrrolidone, ethylene, butadiene, chloroprene, vinyl propionate, and vinyl acetate.

(xi) Nitrogen-containing polymerizable unsaturated monomers: such as (meth)acrylonitrile, (meth)acrylamide, N,N-dimethylaminoethyl (meth)acrylate, N,N-diethylaminoethyl (meth)acrylate, N,N-dimethylaminopropyl (meth)acrylamide, methylene bis(meth)acrylamide, ethylene bis(meth)acrylamide, 2-(methacryloyloxy) ethyltrimethyl ammonium chloride, and adducts of glycidyl (meth)acrylate and amines.

(xii) Polymerizable unsaturated monomers having two or more polymerizable unsaturated groups per molecule: such as allyl (meth)acrylate, ethylene glycol di(meth)acrylate, 1,4-butanediol di(meth)acrylate, neopentyl glycol di(meth)acrylate, and 1,6-hexanediol di(meth)acrylate.

(xiii) Epoxy group-containing polymerizable unsaturated monomers: such as glycidyl (meth)acrylate, β-methylglycidyl (meth)acrylate, 3,4-epoxycyclohexyl methyl(meth)acrylate, 3,4-epoxycyclohexyl ethyl(meth)acrylate, 3,4-epoxycyclohexylpropyl (meth)acrylate, and allyl glycidyl ether.

(xiv) Polymerizable unsaturated monomers having a UV-absorbing functional group: such as 2-hydroxy-4-(3-methacryloyloxy-2-hydroxypropoxy)benzophenone, 2-hydroxy-4-(3-acryloyloxy-2-hydroxypropoxy)benzophenone, 2,2'-dihydroxy-4-(3-methacryloyloxy-2-hydroxypropoxy) benzophenone, 2,2'-dihydroxy-4-(3-acryloyloxy-2-hydroxypropoxy)benzophenone, and 2-(2'-hydroxy-5'-methacryloyloxyethylphenyl)-2H-benzotriazole.

(xv) Photostable polymerizable unsaturated monomers: such as 4-(meth)acryloyloxy-1,2,2,6,6-pentamethylpiperidine, 4-(meth)acryloyloxy-2,2,6,6-tetramethylpiperidine, 4-cyano-4-(meth)acryloylamino-2,2,6,6-tetramethylpiperidine, 1-(meth)acryloyl-4-(meth)acryloylamino-2,2,6,6-tetramethylpiperidine, 1-(meth)acryloyl-4-cyano-4-(meth)acryloylamino-2,2,6,6-tetramethylpiperidine, 4-crotonoyloxy-2,2,6,6-tetramethylpiperidine, 4-crotonoylamino-2,2,6,6-tetramethylpiperidine, and 1-crotonoyl-4-crotonoyloxy-2,2,6,6-tetramethylpiperidine.

(xvi) Polymerizable unsaturated monomers having a carbonyl group: such as acrolein, diacetone acrylamide, diacetone methacrylamide, acetoacetoxy ethyl methacrylate, formylstyrol, and vinyl alkyl ketones having 4 to 7 carbon atoms (for example, vinyl methyl ketone, vinyl ethyl ketone, and vinyl butyl ketone).

In a case where the acrylic resin (B) having an anionic group and a polyoxyalkylene group is produced as a copolymer containing the polymerizable unsaturated monomer (b1) having an anionic group, the polymerizable unsaturated monomer (b2) having a polyoxyalkylene group, and the other polymerizable unsaturated monomer (b3) as copolymerizable monomer components, a use proportion of the polymerizable unsaturated monomer (b1) having an anionic group is preferably in a range of 2 to 10 mass%, and more preferably in a range of 3 to 8 mass%, based on the total amount of the copolymerizable monomer components. A use proportion of the polymerizable unsaturated monomer (b2) having a polyoxyalkylene group is preferably in a range of 5 to 20 mass%, and more preferably in a range of 8 to 15 mass%, based on the total amount of the copolymerizable monomer components. Further, a mass ratio of the polymerizable unsaturated monomer (b1) having an anionic group to the polymerizable unsaturated monomer (b2) having a polyoxyalkylene group is preferably in a range of (b1)/(b2) = 10/90 to 50/50, and more preferably in a range of 20/80 to 40/60.

In a case where the other polymerizable unsaturated monomer (b3) is used as one of the polymerizable unsaturated monomer components constituting the acrylic resin (B) having an anionic group and a polyoxyalkylene group, it is preferable to contain a polymerizable unsaturated monomer (b31) having a hydrophobic group from the viewpoint of a finished property and popping resistance of a multilayer coating film formed.

The polymerizable unsaturated monomer (b31) having a hydrophobic group in the present invention is a polymerizable unsaturated monomer having a linear, branched, or cyclic saturated or unsaturated hydrocarbon group as a hydrophobic group, except for the monomer having an anionic group and/or a polyoxyalkylene group. The number of carbon atoms of the hydrocarbon group is 6 or more, more preferably 6 to 18, even more preferably 6 to 13, and further particularly preferably 8 to 13.

Examples of the polymerizable unsaturated monomer (b31) having a hydrophobic group include: alkyl or cycloalkyl (meth)acrylates, such as hexyl (meth)acrylate, octyl (meth)acrylate, 2-ethylhexyl (meth)acrylate, nonyl (meth)acrylate, tridecyl (meth)acrylate, lauryl (meth)acrylate, stearyl (meth)acrylate, isostearyl (meth)acrylate, cyclohexyl (meth)acrylate, methylcyclohexyl (meth)acrylate, tert-butyl cyclohexyl (meth)acrylate, cyclododecyl (meth)acrylate, and tricyclodecanyl (meth)acrylate; polymerizable unsaturated compounds having an isobornyl group, such as isobornyl (meth)acrylate; polymerizable unsaturated compounds having an adamantyl group, such as adamantyl (meth)acrylate; and aromatic ring-containing polymerizable unsaturated monomers such as benzyl (meth)acrylate, styrene, $\alpha$-methylstyrene, and vinyl toluene. These monomers can be used alone or in a combination of two or more types.

Particularly, from the viewpoint of smoothness, distinctness of image, and the like of the multilayer coating film formed, the polymerizable unsaturated monomer (b31) having a hydrophobic group preferably contains, as at least one type thereof, at least one polymerizable unsaturated monomer selected from the group consisting of alkyl (meth)acrylates having a saturated hydrocarbon group having 6 to 13 carbon atoms such as hexyl (meth)acrylate, 2-ethylhexyl (meth)acrylate, tridecyl (meth)acrylate, and lauryl (meth)acrylate; and (meth)acrylates having an isobornyl group such as isobornyl (meth)acrylate, more preferably isobornyl (meth)acrylate, and particularly preferably isobornyl acrylate.

In a case where the polymerizable unsaturated monomer (b31) having a hydrophobic group is contained as one of the polymerizable unsaturated monomer components constituting the acrylic resin (B) having an anionic group and a polyoxyalkylene group, a use proportion of the polymerizable unsaturated monomer (b31) having a hydrophobic group is preferably in a range of 25 to 60 mass%, more preferably in a range of 30 to 60 mass%, and even more preferably in a range of 30 to 50 mass%, based on the total amount of the copolymerizable monomer components (the polymerizable unsaturated monomer (b1) having an anionic group, the polymerizable unsaturated monomer (b2) having a polyoxyalkylene group, and the other polymerizable unsaturated monomer (b3)).

Particularly, in a case where the polymerizable unsaturated monomer (b31) having a hydrophobic group contains the isobornyl (meth)acrylate as at least one type thereof, the use proportion of the isobornyl (meth)acrylate is preferably in a range of 25 to 60 mass%, more preferably in a range of 30 to 60 mass%, and even more preferably in a range of 30 to 50 mass%, based on the total amount of the copolymerizable monomer components (the polymerizable unsaturated monomer (b1) having an anionic group, the polymerizable unsaturated monomer (b2) having a polyoxyalkylene group, and the other polymerizable unsaturated monomer (b3)).

The weight average molecular weight of the acrylic resin (B) having an anionic group and a polyoxyalkylene group thus obtained is preferably in a range of 20000 to 60000, more preferably in a range of 30000 to 60000, and even more preferably in a range of 40000 to 60000.

From the viewpoint of the finished property of the coating film formed, washability of the coating machine, and the like, an acid value of the acrylic resin (B) having an anionic group and a polyoxyalkylene group is preferably in a range of 20 to 50 mg KOH/g, and more preferably in a range of 25 to 45 mg KOH/g.

A solid content of the acrylic resin (B) having an anionic group and a polyoxyalkylene group in the aqueous coating composition of the present invention is preferably in a range of 5 to 40 parts by mass, more preferably in a range of 8 to 30 parts by mass, and even more preferably in a range of 10 to 20 parts by mass, based on 100 parts by mass of the resin solid content in the aqueous coating composition, from the viewpoint of the finished property of the coating film formed, washability of the coating machine, and the like.

Aqueous Coating Composition

The aqueous coating composition of the present invention can be prepared, for example, by mixing the aqueous polyolefin-based resin (A) and the acrylic resin (B) having an anionic group and a polyoxyalkylene group in accordance with a typical method, and appropriately diluting the mixture with an aqueous medium such as deionized water.

The aqueous coating composition of the present invention may contain a resin component besides the aqueous polyolefin-based resin (A) and the acrylic resin (B) having an anionic group and a polyoxyalkylene group, as desired. Examples of the resin component include a polyester resin, and a urethane resin. Further examples thereof include a crosslinking agent such as an amino resin, a polyisocyanate compound, and an epoxy compound.

In a case where a polyester resin is used, it is preferable to use a hydroxyl group-containing polyester resin (C) from the viewpoint of the finished property, water resistance, and the like of the coating film formed. The hydroxyl group-containing polyester resin (C) can be produced, for example, by an esterification reaction of a polybasic acid and a polyhydric alcohol in an excessive amount of hydroxyl groups through a method known per se. The polybasic acid is a compound having two or more carboxyl groups per molecule, and examples thereof include phthalic acid, isophthalic acid, terephthalic acid, tetrahydrophthalic acid, hexahydrophthalic acid, 1,4-cyclohexanedicarboxylic acid, pyromellitic acid, itaconic acid, adipic acid, sebacic acid, azelaic acid, dodecanedioic acid, dimer acid, himic acid, succinic acid, het acid, and anhydrides thereof. The polyhydric alcohol is a compound having two or more hydroxyl groups per molecule, and examples thereof include ethylene glycol, diethylene glycol, triethylene glycol, propylene glycol, neopentyl glycol, butylene glycol, hexanediol, 2-ethyl-2-butyl-1,3-propanediol, cyclohexanedimethanol, trimethylolethane, trimethylolpropane, pentaerythritol, dipentaerythritol, and sorbitol. The hydroxyl group can be introduced by, for example, a method in which the number of moles of hydroxyl groups in the polyhydric alcohol is made larger than the number of moles of carboxyl groups in the polybasic acid, or a method in which a polyhydric alcohol having three or more hydroxyl groups per molecule is used in combination.

As the hydroxyl group-containing polyester resin (C), a fatty acid-modified polyester resin that is modified with a fatty acid such as soybean oil fatty acid, castor oil fatty acid, or dehydrated castor oil fatty acid may also be used.

As needed, the hydroxyl group-containing polyester resin (C) may be modified with an epoxy compound such as butyl glycidyl ether, alkylphenyl glycidyl ether, or neodecanoic acid glycidyl ester.

The hydroxyl group-containing polyester resin (C) may be modified with an acrylic resin. As the hydroxyl group-containing polyester resin modified with an acrylic resin, those obtained by a known method, which is not particularly limited, can be used. Examples of the known method include: a method of polymerizing a mixture of a radically polymerizable unsaturated group-containing polyester resin and a polymerizable unsaturated monomer; and a method of bonding a polyester resin and an acrylic resin by a chemical reaction.

The hydroxyl value of the hydroxyl group-containing polyester resin (C) is preferably in a range of 40 to 200 mg KOH/g, more preferably in a range of 50 to 180 mg KOH/g, and particularly preferably in a range of 50 to 140 mg KOH/g, from the viewpoint of the finished property and water resistance of the coating film formed, washability of the coating machine, and the like.

Also, when the hydroxyl group-containing polyester resin (C) includes a carboxyl group, the acid value thereof is preferably in a range of 50 mg KOH/g or less, particularly in a range of 10 to 45 mg KOH/g, and particularly preferably in a range of 15 to 40 mg KOH/g, from the viewpoint of the finished property, water resistance, and the like of the coating film formed.

The number average molecular weight of the hydroxyl group-containing polyester resin (C) is preferably in a range of 1000 to 100000, more preferably in a range of 1500 to 80000, and even particularly preferably in a range of 1500 to 60000, from the viewpoint of the finished property, water resistance, and the like of the coating film formed.

In a case where the aqueous coating composition of the present invention contains the hydroxyl group-containing polyester resin (C), the solid content thereof is preferably in a range of 20 to 70 parts by mass, and more preferably in a range of 30 to 60 parts by mass, based on 100 parts by mass of the total solid content of the aqueous polyolefin-based

resin (A) and the acrylic resin (B) having an anionic group and a polyoxyalkylene group, from the viewpoint of the finished property, water resistance, and the like of the coating film formed.

In a case where the aqueous coating composition of the present invention contains the hydroxyl group-containing polyester resin (C), the solid content of the hydroxyl group-containing polyester resin (C) is preferably in a range of 10 to 45 parts by mass, more preferably in a range of 12 to 35 parts by mass, and even more preferably in a range of 12 to 25 parts by mass, based on 100 parts by mass of the resin solid content of the aqueous coating composition, from the viewpoint of the finished property, water resistance, and the like of the coating film formed.

In a case of using a polyurethane resin, it is preferable to use an aqueous polyurethane resin from the viewpoint of adhesiveness and the like of the coating film formed. The aqueous polyurethane resin is a water-soluble or water-dispersible resin having a urethane bond in the molecule, and examples of the form thereof include a self-emulsifiable emulsion having an acid value, an emulsion in combination with an emulsifier, and a water-soluble resin, and in particular, the form of an emulsion is preferable. The urethane emulsion is usually an emulsion produced by subjecting a urethane prepolymer obtained by preliminarily reacting a diol and a diisocyanate, and as desired, a dimethylolalkanoic acid or the like to forced emulsification or self-emulsification in the presence of an emulsifier while dispersing the urethane prepolymer in water.

Examples of the skeleton of the aqueous polyurethane resin include ether-based, carbonate-based, and ester-based skeletons, and among these, ether-based and carbonate-based skeletons are preferable from the viewpoint of water resistance of the coating film formed. The aqueous polyurethane resin may contain a hydroxyl group.

In a case where the aqueous polyurethane resin is used, the solid content thereof is preferably in a range of 5 to 20 parts by mass, and more preferably in a range of 10 to 20 parts by mass, based on 100 parts by mass of the total solid content of the aqueous polyolefin-based resin (A) and the acrylic resin (B) having an anionic group and a polyoxyalkylene group, from the viewpoint of adhesiveness of the coating film formed.

The aqueous coating composition of the present invention may contain a crosslinking agent (D), as desired. From the viewpoint of water resistance and the like of the coating film formed, the aqueous coating composition of the present invention preferably contains the crosslinking agent (D).

As the crosslinking agent (D), for example, an amino resin, a polyisocyanate compound, a blocked polyisocyanate compound, a carbodiimide compound, an epoxy compound, or the like can be used, and these can be used alone or in combination of two or more types. Particularly, it is preferable to contain at least one type selected from an amino resin, a polyisocyanate compound, and a blocked polyisocyanate compound, from the viewpoint of the water resistance and finished property of the coating film formed, and it is more preferable to contain an amino resin and/or a blocked polyisocyanate compound from the viewpoint of storage stability and the like.

In a case where the aqueous coating composition of the present invention contains the crosslinking agent (D), a total solid content of the crosslinking agent (D) is preferably in a range of 5 to 100 parts by mass, and more preferably in a range of 15 to 80 parts by mass, based on 100 parts by mass of the total solid content of the aqueous polyolefin-based resin (A) and the acrylic resin (B) having an anionic group and a polyoxyalkylene group, from the viewpoint of the finished property, water resistance, and the like of the coating film formed.

The total solid content of the crosslinking agent (D) is preferably in a range of 3 to 45 parts by mass, more preferably in a range of 5 to 35 parts by mass, and even more preferably in a range of 8 to 30 parts by mass, based on 100 parts by mass of the resin solid content in the aqueous coating composition, from the viewpoint of the finished property, water resistance, and the like of the coating film formed. Note that in the present invention, the solid content of the crosslinking agent (D) is contained in the resin solid content in the aqueous coating composition.

As the amino resin, a melamine resin is preferable. As the melamine resin, a methyl-etherified melamine resin (i) obtained by partially or fully etherifying methylol groups of a partially or fully methylolated melamine resin with methyl alcohol, an ethyl-etherified melamine resin (ii) obtained by partially or fully etherifying methylol groups of a partially or fully methylolated melamine resin with ethyl alcohol, a butyl-etherified melamine resin (iii) obtained by partially or fully etherifying methylol groups of a partially or fully methylolated melamine resin with butyl alcohol, or a methyl-butyl mixed etherified melamine resin (iv) obtained by partially or fully etherifying methylol groups of a partially or fully methylolated melamine resin with methyl alcohol and butyl alcohol can be suitably used. Particularly, the melamine resin preferably contains at least one type selected from the ethyl-etherified melamine resin (ii), the butyl-etherified melamine resin (iii), and the methyl-butyl mixed etherified melamine resin (iv), and more preferably contains at least one type selected from the butyl-etherified melamine resin (iii) and the methyl-butyl mixed etherified melamine resin (iv), from the viewpoint of adhesiveness, weather resistance, and the like of the coating film formed.

The melamine resin preferably has a weight average molecular weight in a range of generally 450 to 6000, particularly 500 to 4000, and more particularly 550 to 3000.

A commercially available product of the melamine resin can be used, and specific examples thereof include "CYMEL 202", "CYMEL 203", "CYMEL 204", "CYMEL 211", "CYMEL 238", "CYMEL 250", "CYMEL 251", "CYMEL 303", "CYMEL 323", "CYMEL 324", "CYMEL 325", "CYMEL 327", "CYMEL 350", "CYMEL 385", "CYMEL 1156", "CYMEL 1158", "CYMEL 1116", and "CYMEL 1130" (all available from Allnex Japan Inc., trade names), and "U-VAN 120", "U-VAN 20HS", "U-VAN 20SE60", "U-VAN 2021", "U-VAN 2028", and "U-VAN 28-60" (all available from Mitsui Chemicals, Inc., trade names).

In a case where the amino resin is used, the solid content thereof is preferably in a range of 5 to 45 parts by mass, and more preferably in a range of 15 to 35 parts by mass, based on 100 parts by mass of the total solid content of the aqueous polyolefin-based resin (A) and the acrylic resin (B) having an anionic group and a polyoxyalkylene group, from the viewpoint of the finished property, water resistance, and the like of the coating film formed.

A solid content of the amino resin is preferably in a range of 3 to 45 parts by mass, more preferably in a range of 5 to 35 parts by mass, and even more preferably in a range of 8 to 30 parts by mass, based on 100 parts by mass of the resin solid content in the aqueous coating composition, from the viewpoint of the finished property, water resistance, and the like of the coating film formed.

The polyisocyanate compound is a compound having two or more isocyanate groups per molecule. Examples of the polyisocyanate compound include aromatic diisocyanates such as tolylene diisocyanate (TDI), 4,4'-diphenylmethane diisocyanate (MDI), xylylene diisocyanate (XDI), and m-xylylene diisocyanate (MXDI); aliphatic diisocyanates such as hexamethylene diisocyanate (HDI); alicyclic diisocyanates such as isophorone diisocyanate (IPDI) and hydrogenated MDI; compounds obtained by making these diisocyanate compounds nonvolatile to reduce toxicity thereof; biurets, uretdiones, isocyanurates, or adducts of these diisocyanate compounds; and relatively low-molecular-weight urethane prepolymers.

The polyisocyanate compound is preferably hydrophilized to be used. The polyisocyanate compound can be hydrophilized by, for example, a method including introducing an ionic hydrophilic group such as a carboxyl group, a sulfonate group, or a tertiary amino group into the compound and neutralizing the compound with a neutralizing agent such as a hydroxycarboxylic acid such as dimethylolpropionic acid, ammonia, or a tertiary amine; a method of introducing a nonionic hydrophilic group such as a polyoxyethylene group into the polyisocyanate compound; or a method of mixing and emulsifying the polyisocyanate compound and a surfactant. As the hydrophilic polyisocyanate compound, a commercially available product thereof can be used. Examples of the commercially available product thereof include "Bayhydur 3100" (trade name, available from Sumika Covestro Urethane Co., Ltd., hydrophilic hexamethylene diisocyanurate).

The polyisocyanate compound can be used as a blocked polyisocyanate compound produced by blocking the isocyanate group of the polyisocyanate compound with a blocking agent. Examples of such a blocking agent include: phenolic compounds, such as phenol, cresol, xylenol, nitrophenol, ethylphenol, hydroxydiphenyl, butylphenol, isopropylphenol, nonylphenol, octylphenol, and methyl hydroxybenzoate; lactam-based compounds, such as ε-caprolactam, δ-valerolactam, γ-butyrolactam, and β-propiolactam; aliphatic alcohol-based compounds, such as methanol, ethanol, propyl alcohol, butyl alcohol, amyl alcohol, and lauryl alcohol; ether-based compounds, such as ethylene glycol monomethyl ether, ethylene glycol monoethyl ether, ethylene glycol monobutyl ether, diethylene glycol monomethyl ether, diethylene glycol monoethyl ether, propylene glycol monomethyl ether, and methoxymethanol; alcohol-based compounds, such as benzyl alcohol, glycolic acid, methyl glycolate, ethyl glycolate, butyl glycolate, lactic acid, methyl lactate, ethyl lactate, butyl lactate, methylol urea, methylol melamine, diacetone alcohol, 2-hydroxyethyl acrylate, and 2-hydroxyethyl methacrylate; oxime-based compounds, such as formamide oxime, acetoamide oxime, acetoxime, methyl ethyl ketoxime, diacetyl monoxime, benzophenone oxime, and cyclohexane oxime; active methylene-based compounds, such as dimethyl malonate, diethyl malonate, ethyl acetoacetate, methyl acetoacetate, and acetylacetone; mercaptan-based compounds, such as butyl mercaptan, t-butyl mercaptan, hexyl mercaptan, t-dodecyl mercaptan, 2-mercaptobenzothiazole, thiophenol, methylthiophenol, and ethylthiophenol; acid amide-based compounds, such as acetanilide, acetanisidide, acetotoluide, acrylamide, methacrylamide, acetic amide, stearic amide, and benzamide; imide-based compounds, such as succinimide, phthalimide, and maleimide; amine-based compounds, such as diphenylamine, phenylnaphthylamine, xylidine, N-phenylxylidine, carbazole, aniline, naphthylamine, butylamine, dibutylamine, and butylphenylamine; imidazole-based compounds, such as imidazole and 2-ethylimidazole; urea-based compounds, such as urea, thiourea, ethyleneurea, ethylenethiourea, and diphenylurea; carbamic ester-based compounds, such as phenyl N-phenylcarbamate; imine-based compounds, such as ethyleneimine and propyleneimine; sulfite-based compounds, such as sodium bisulfite and potassium bisulfite; and azole-based compounds. Examples of the azole-based compounds include pyrazole or pyrazole derivatives, such as pyrazole, 3,5-dimethylpyrazole, 3-methylpyrazole, 4-benzyl-3,5-dimethylpyrazole, 4-nitro-3,5-dimethylpyrazole, 4-bromo-3,5-dimethylpyrazole, and 3-methyl-5-phenylpyrazole; imidazole or imidazole derivatives, such as imidazole, benzimidazole, 2-methylimidazole, 2-ethylimidazole, and 2-phenylimidazole; and imidazoline derivatives, such as 2-methylimidazoline and 2-phenylimidazoline.

Particularly, preferred examples of the blocking agent include oxime-based blocking agents, active methylene-based blocking agents, and pyrazole or pyrazole derivatives.

In a case where the aqueous coating composition of the present invention contains the blocked polyisocyanate compound, a solid content thereof is preferably in a range of 15 to 55 parts by mass, and more preferably 25 to 45 parts by mass, based on 100 parts by mass of the total solid content of the aqueous polyolefin-based resin (A) and the acrylic resin (B) having an anionic group and a polyoxyalkylene group, from the viewpoint of the finished property, water

resistance, and the like of the coating film formed.

In a case where the aqueous coating composition of the present invention contains the blocked polyisocyanate compound, a total solid content of the blocked polyisocyanate compound is preferably in a range of 3 to 45 parts by mass, more preferably in a range of 5 to 35 parts by mass, and even more preferably in a range of 8 to 30 parts by mass, based on 100 parts by mass of the resin solid content in the aqueous coating composition, from the viewpoint of the finished property, water resistance, and the like of the coating film formed.

The aqueous coating composition of the present invention may contain various pigments (E). Such pigments include a color pigment, an extender pigment, an effect pigment, and the like.

Examples of the color pigment include titanium oxide, zinc oxide, carbon black, molybdenum red, Prussian blue, cobalt blue, azo pigments, phthalocyanine pigments, quinacridone pigments, isoindoline pigments, threne-based pigments, and perylene pigments. Particularly, titanium oxide is preferably contained as at least one type of the color pigment.

Examples of the extender pigment include clay, kaolin, barium sulfate, barium carbonate, calcium carbonate, talc, silica, and alumina white. Particularly, talc is preferably contained as at least one type of the extender pigment.

Examples of the effect pigment include aluminum (including vapor-deposited aluminum), copper, zinc, brass, nickel, aluminum oxide, mica, aluminum oxide coated with titanium oxide and/or iron oxide, mica coated with titanium oxide and/or iron oxide, glass flakes, and hologram pigments. These effect pigments can be used alone or in a combination of two or more types. The aluminum pigment is classified into a non-leafing type aluminum and a leafing type aluminum, and any of them can be used.

In a case where the aqueous coating composition of the present invention contains the pigment (E), a content of the pigment (E) is preferably in a range of 10 to 200 parts by mass, and more preferably in a range of 20 to 180 parts by mass, based on 100 parts by mass of the resin solid content in the aqueous coating composition.

In a case where the aqueous coating composition of the present invention contains the titanium oxide as at least one type of the pigment (E), a content of the titanium oxide is preferably in a range of 100 to 200 parts by mass, and more preferably in a range of 120 to 180 parts by mass, based on 100 parts by mass of the resin solid content in the aqueous coating composition.

The aqueous coating composition of the present invention may contain, in addition to the pigment (E) such as a color pigment, an extender pigment, and an effect pigment, a conductive pigment for the purpose of imparting conductivity to the plastic substrate. The conductive pigment is not particularly limited as long as the pigment can impart conductivity to the coating film formed, and examples thereof include pigments in the form of particles, flakes, and fibers (including whiskers). Specific examples of the conductive pigment include conductive carbon, such as conductive carbon blacks, carbon nanotubes, carbon nanofibers, and carbon microcoils; metal powders, such as those of silver, nickel, copper, graphite, and aluminum; and furthermore, antimony-doped tin oxide, phosphorus-doped tin oxide, acicular titanium oxide surface-coated with tin oxide/antimony, antimony oxide, zinc antimonate, indium tin oxide, pigments obtained by coating a whisker surface of carbon or graphite with tin oxide or the like; pigments obtained by coating a surface of flaky mica with at least one conductive metal oxide selected from the group consisting of tin oxide, antimony-doped tin oxide, tin-doped indium oxide (ITO), fluorine-doped tin oxide (FTO), phosphorus-doped tin oxide, and nickel oxide; and conductive pigments containing tin oxide and phosphorus on a surface of a titanium dioxide particle. These pigments can be used alone or in combination of two or more types thereof. The conductive pigment is preferably conductive carbon.

A solid content of the conductive pigment is preferably in a range of 0.01 to 300 parts by mass, and more preferably in a range of 0.5 to 180 parts by mass, based on 100 parts by mass of the resin solid content in the aqueous coating composition, from the viewpoint of conductivity, adhesiveness, and the like of the coating film formed.

In addition, the aqueous coating composition of the present invention preferably further contains a diester compound (F) represented by the following general formula (1) from the viewpoint of the finished property of the coating film formed.

[Chemical Formula 1]

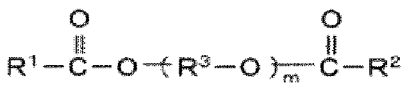

(1)

where $R^1$ and $R^2$ independently represent a hydrocarbon group having 4 to 18 carbon atoms, $R^3$ represents an alkylene group having 2 to 4 carbon atoms, m is an integer of 3 to 20, and m groups of $R^3$ may be the same as or different.

In the above formula (1), the hydrocarbon group represented by $R^1$ or $R^2$ is preferably an alkyl group having 5 to 11 carbon atoms, more preferably an alkyl group having 5 to 9 carbon atoms, and even more preferably an alkyl group having 6 to 8 carbon atoms. In particular, when $R^1$ and $R^2$ are branched alkyl groups having 6 to 8 carbon atoms, a multilayer coating film having an excellent finished property can be formed even when the paint is applied after being

stored for a relatively long period of time. $R^3$ is preferably ethylene, and m is particularly preferably an integer of 4 to 10.

The diester compound (F) can be produced, for example, by an esterification reaction of a polyoxyalkylene glycol having two terminal hydroxyl groups and a monocarboxylic acid having a hydrocarbon group having 4 to 18 carbon atoms.

Examples of the polyoxyalkylene glycol include polyethylene glycol, polypropylene glycol, a block copolymer of polyethylene glycol and polypropylene glycol, and polybutylene glycol. Among these, polyethylene glycol is particularly preferably used. These polyoxyalkylene glycols preferably have a weight average molecular weight in a range of generally about 120 to about 800, particularly about 150 to about 600, and further particularly about 200 to about 400, from the viewpoint of water resistance and the like.

Examples of the monocarboxylic acid having a hydrocarbon group having 4 to 18 carbon atoms include pentanoic acid, hexanoic acid, 2-ethylbutanoic acid, 3-methylpentanoic acid, benzoic acid, cyclohexanecarboxylic acid, heptanoic acid, 2-ethylpentanoic acid, 3-ethylpentanoic acid, octanoic acid, 2-ethylhexanoic acid, 4-ethylhexanoic acid, nonanoic acid, 2-ethylheptanoic acid, decanoic acid, 2-ethyloctanoic acid, 4-ethyloctanoic acid, dodecanoic acid, hexadecanoic acid, and octadecanoic acid. Among them, monocarboxylic acids having an alkyl group having 5 to 9 carbon atoms such as hexanoic acid, heptanoic acid, 2-ethylpentanoic acid, 3-ethylpentanoic acid, octanoic acid, 2-ethylhexanoic acid, 4-ethylhexanoic acid, nonanoic acid, 2-ethylheptanoic acid, decanoic acid, 2-ethyloctanoic acid, and 4-ethyloctanoic acid are preferred, monocarboxylic acids having an alkyl group having 6 to 8 carbon atoms such as heptanoic acid, 2-ethylpentanoic acid, 3-ethylpentanoic acid, octanoic acid, 2-ethylhexanoic acid, 4-ethylhexanoic acid, nonanoic acid, and 2-ethylheptanoic acid are more preferred, and monocarboxylic acids having a branched alkyl group having 6 to 8 carbon atoms such as 2-ethylpentanoic acid, 3-ethylpentanoic acid, 2-ethylhexanoic acid, 4-ethylhexanoic acid, and 2-ethylheptanoic acid are even more preferred.

The diesterification reaction between the polyoxyalkylene glycol and the monocarboxylic acid can be carried out by a method known per se. The polyoxyalkylene glycol and the monocarboxylic acid each can be used alone or in combination of two or more types.

The resulting diester compound (F) preferably has a molecular weight in a range of generally about 320 to about 1000, particularly about 400 to about 800, and more particularly about 500 to about 700.

In a case where the aqueous coating composition of the present invention contains the diester compound (F), a content of the diester compound (F) is preferably in a range of 5 to 30 parts by mass, and more preferably in a range of 10 to 20 parts by mass, based on 100 parts by mass of the resin solid content in the aqueous coating composition.

In addition, the aqueous coating composition of the present invention preferably further contains a phosphate compound (G) represented by the following general formula (2) from the viewpoint of washability of the coating machine, and the like.

Phosphate Compound (G)

The phosphate compound (G) is a phosphate compound represented by the following general formula (2):

[Chemical Formula 2]

$$[R^4O(R^5O)_y]_x-\overset{\overset{\large O}{\|}}{P}-(OH)_{3-x} \qquad (2)$$

where x is 1 or 2, y is 0 or an integer of 1 to 20,
$R^4$ is a hydrocarbon group having 2 or more and 20 or less carbon atoms which may have a substituent,
when x is 2, each $R^4$ may be the same or different,
$R^5$ is an alkylene group having 2 to 4 carbon atoms,
when y is 2 or more, y oxyalkylene units ($R^5O$) may be the same or different, and when they are different, $(R^5O)_y$ may be in any addition form of random addition, block addition, or alternate addition, and
when x is 2, $(R^5O)_y$ may be the same or different.

The phosphate compound (G) having the structure of the general formula (2) is a compound having a phosphate group and a hydrocarbon group, and preferably further having a (poly)oxyalkylene group. The compound acts as an acid compound derived from a phosphate group and also acts as a surfactant because it has both a phosphate group which is a hydrophilic group (preferably further a (poly)oxyalkylene group which is a nonionic group) and a hydrocarbon group which is a hydrophobic group.

In the general formula (2), $R^4$ is a hydrocarbon group which may have a substituent, and $R^4$ is preferably a hydrocarbon group having 2 to 20 carbon atoms, particularly 4 to 20 carbon atoms, more particularly 7 to 20 carbon

atoms, and even more particularly 7 to 16 carbon atoms, from the viewpoint of washability of the coating machine, the finished property and the like of the coating film formed.

The hydrocarbon group is preferably a linear or branched alkyl group, and particularly preferably a branched alkyl group. Examples of the linear or branched alkyl group having 2 to 20 carbon atoms include an ethyl group, an n-propyl group, an isopropyl group, an n-butyl group, an isobutyl group, a sec-butyl group, a tert-butyl group, an n-pentyl group, an n-hexyl group, a 2-ethylbutyl group, a 3-methylpentyl group, a 1,2-dimethylbutyl group, an n-heptyl group, a 2-ethylpentyl group, a 3-ethylpentyl group, a 1,4-dimethylpentyl group, a 2-methyl-1-isopropylpropyl group, a 1-ethyl-3-methylbutyl group, an n-octyl group, a 4-ethylhexyl group, a 3-methyl-1-isopropylbutyl group, a 2-methyl-1-isopropylbutyl group, a 3,4,4-trimethylpentyl group, a 1,5-dimethylhexyl group, an n-nonyl group, a 2-ethylheptyl group, a 3,5,5-trimethylhexyl group, a 1,6-dimethylheptyl group, an n-decyl group, a 2-ethyloctyl group, a 4-ethyloctyl group, a 3,6,6-trimethylheptyl group, a 1,7-dimethyloctyl group, an n-undecyl group, a 2-ethylnonyl group, a 3,7,7-trimethyloctyl group, 1,8-dimethynonyl group, an n-dodecyl group, a 2-ethylundecyl group, a 3,8,8-trimethylnonyl group, a 1,9-dimethyldecyl group, an n-tridecyl group, a 2-ethylundecyl group, a 3,9,9-trimethyldecyl group, a 1,10-dimethylundecyl group, an n-tetradecyl group, a 2-ethyldodecyl group, a 3,10,10-trimethylundecyl group, a 1,11-dimethyldodecyl group, an n-pentadecyl group, a 2-ethyltridecyl group, a 3,11,11-trimethyldodecyl group, a 1,12-dimethyltridecyl group, an n-hexadecyl group, a 2-ethyltetradecyl group, a 3,12,12-trimethyltridecyl group, a 1,13-dimethyltetradecyl group, an n-heptadecyl group, a 2-ethylpentadecyl group, a 3,13,13-trimethyltetradecyl group, a 1,14-dimethylpentadecyl group, an n-octadecyl group, a 2-ethylhexadecyl group, a 3,14,14-trimethylpentadecyl group, a 1,15-dimethylhexadecyl group, an n-nonadecyl group, a 2-ethylheptadecyl group, a 3,15,15-trimethylhexadecyl group, a 1,16-dimethylheptadecyl group, an n-icosyl group, a 2-ethyloctadecyl group, a 3,16,16-trimethylheptadecyl group, and 1,17-dimethyloctadecyl group. Particularly, $R^4$ in the general formula (2) is particularly preferably a branched alkyl group having 7 to 20 carbon atoms.

In a case where $R^4$ is a branched alkyl group, a coating film having excellent distinctness of image can be formed even when the present paint is applied after being stored for a relatively long period of time.

In a case where $R^4$ is a hydrocarbon group having a substituent, examples of the substituent include halogens (e.g., fluorine, chlorine, bromine, etc.), alkenyl groups (e.g., alkenyl groups having 2 to 6 carbon atoms and 1 to 2 carbon-carbon double bonds such as a vinyl group, an allyl group, a 2-butenyl group, a 3-butenyl group, a 2-pentenyl group, a 1,3-pentadienyl group, and a 2-hexenyl group), aryl groups (e.g., aryl groups having 6 to 16 carbon atoms such as a phenyl group, a naphthyl group, a biphenyl group, an anthracenyl group, a phenanthryl group, and a pyrenyl group), and alkoxy groups (e.g., alkoxy groups having 1 to 6 carbon atoms such as a methoxy group, an ethoxy group, an n-propoxy group, an isopropoxy group, an n-butoxy group, an isobutoxy group, a sec-butoxy group, a tert-butoxy group, an n-pentyloxy group, an n-hexyloxy group, a 2-ethylbutoxy group, a 3-methylpentyloxy group, and a 1,2-dimethylbutoxy group).

The phosphate compound (G) can be produced, for example, by reacting a phosphorylating agent such as orthophosphoric acid, phosphorus pentoxide (phosphoric anhydride), polyphosphoric acid, or phosphorus oxychloride with an alcohol or an alcohol alkylene oxide adduct obtained by addition reaction of an alkylene oxide to an alcohol.

The reaction of the phosphorylating agent with the alcohol or the alcohol alkylene oxide adduct can be carried out by a method known per se, and in this case, the alcohol and the alcohol alkylene oxide adduct can each be used alone or in combination of two or more types.

In general, the phosphate compound (G) represented by the general formula (2) is obtained as a mixture of a monoester and a diester.

Examples of the alcohol include ethanol, propanol, isopropanol, butanol, isobutanol, pentanol, hexanol, 2-ethylbutanol, 3-methylpentanol, cyclohexyl alcohol, heptanol, 2-ethylpentanol, 3-ethylpentanol, octanol, 2-ethylhexanol, 4-ethylhexanol, nonyl alcohol, 2-ethylheptanol, decanol, 2-ethyloctanol, 4-ethyloctanol, dodecanol, hexadecanol, and octadecanol.

Particularly, alcohols having an alkyl group having 7 to 20 carbon atoms such as heptanol, 2-ethylpentanol, 3-ethylpentanol, octanol, 2-ethylhexanol, 4-ethylhexanol, nonyl alcohol, 2-ethylheptanol, decanol, 2-ethyloctanol, 4-ethyloctanol, dodecanol, hexadecanol, and octadecanol, and particularly alcohols having a branched alkyl group having 7 to 20 carbon atoms such as 2-ethylpentanol, 3-ethylpentanol, 2-ethylhexanol, 4-ethylhexanol, 2-ethylheptanol, 2-ethyloctanol and 4-ethyloctanol can be suitably used.

Examples of the alkylene oxide include alkylene oxides having 2 to 4 carbon atoms, such as ethylene oxide, propylene oxide, and butylene oxide, and one or more of these can be used. Particularly, ethylene oxide can be suitably used. Thus, in the general formula (2), examples of the oxyalkylene unit ($R^5O$) include an oxyethylene group, an oxypropylene group, and an oxybutylene group, and a plurality of oxyalkylene units may be the same or different. As the oxyalkylene unit ($R^5O$), an oxyethylene group or the like is preferable.

In the general formula (2), y is the number of moles of alkylene oxide added, and y is preferably in a range of 1 to 20, particularly 1 to 10, and more particularly 1 to 5. In a preferred embodiment, the phosphate compound (G) may be a mixture of a phosphate compound represented by the general formula (2) in which y is 0 and a phosphate compound represented by the general formula (2) in which y is an integer of 1 to 20.

The number average molecular weight of the phosphate compound (G) is preferably in a range of 100 to 3000, particularly 100 to 2500, and more particularly 100 to 2000. The molecular weight of the phosphate compound (G) can be calculated based on a molecular weight of a raw material used and information on synthesis conditions. The average molecular weight of the phosphate compound (G) can also be measured by the same method as described above for the resin other than the aqueous polyolefin-based resin (A).
The phosphate compound (G) preferably has an HLB value in a range of 3 to 17, particularly 3 to 15, and more particularly 4 to 13.
When the HLB value is less than 3, hydrophilicity is low and emulsifying ability is weak, and thus, stability, smoothness, distinctness of image, and the like of the paint may be insufficient.
On the other hand, when the HLB value exceeds 17, the hydrophilicity is so high that water resistance of the resulting coating film may decrease or popping resistance at the time of coating may decrease.
The HLB value is a value representing a degree of affinity of a surfactant for water and oil (water-insoluble organic compound). It is an acronym for Hydrophile-Lipophile Balance.
In the present invention, the HLB value is a value calculated by the following Griffin equation based on the weight fraction.

$$\mathrm{HLB} = 20(\mathrm{MH}/\mathrm{M})$$

where MH represents a molecular weight of a hydrophilic group portion, and M represents a molecular weight of a compound (surfactant).
Note that in the present invention, the HLB value of the phosphate compound (G) is defined as an HLB value of a raw material nonionic compound used for producing the phosphate compound (G).
Specifically, as described above with respect to the production of the phosphate compound (G), the phosphate compound (G) is produced by reacting a phosphorylating agent with an alcohol or an alcohol alkylene oxide adduct, but the HLB value of the phosphate compound (G) of the present invention is defined as the HLB value of the alcohol alkylene oxide adduct among the raw materials for producing the phosphate compound (G). Further, in this case, when the alcohol which is a raw material of the alcohol alkylene oxide adduct is water-soluble, the HLB value cannot be calculated.
The phosphate compound (G) may be used alone or in combination of two or more types thereof. The phosphate compound (G) may be either a commercially available product or a synthetic product.
In a case where the aqueous coating composition of the present invention contains the phosphate compound (G), a content of the phosphate compound (G) is preferably in a range of 0.1 to 5 parts by mass, and more preferably in a range of 0.2 to 3 parts by mass, based on 100 parts by mass of the resin solid content in the aqueous coating composition.
The aqueous coating composition of the present invention may contain additives for paint, such as a curing catalyst, a thickener, an antifoaming agent, an organic solvent, a surface conditioner, a surfactant, an ultraviolet absorber, a light stabilizer, and an antioxidant, as desired.
A viscosity of the aqueous coating composition of the present invention is preferably in a range of 400 to 3000 mPa s, more preferably in a range of 600 to 2500 mPa·s, and particularly preferably in a range of 800 to 2000 mPa·s as measured at 23°C using a Brookfield type (B-type) viscometer after rotation for 1 minute at a rotational speed of 6 rpm, from the viewpoint of the finished property and the like of the coating film formed. As the B-type viscometer, "LVDV-I" (trade name, available from BROOKFIELD) can be used. A coating solid content concentration of the aqueous coating composition of the present invention is usually about 5 to 60 mass%, and preferably about 10 to 50 mass%.
The aqueous coating composition of the present invention is used in a coating process including

(1) applying an aqueous coating composition onto an object to be coated using a coating machine, and
(2) washing the coating machine using an alkaline washing water having a pH of 9.5 or more.

The aqueous coating composition of the present invention can be applied onto surfaces of various substrates, and the object to be coated is not particularly limited. However, the aqueous coating composition can be suitably used for coating a plastic substrate as the object to be coated. As the plastic substrate, for example, a polyolefin produced by (co)polymerizing one or more of olefins having 2 to 10 carbon atoms such as ethylene, propylene, butylene, and hexene is particularly suitable, but in addition thereto, the aqueous coating composition of the present invention can also be applied onto polycarbonate, an ABS resin, a urethane resin, polyamide, and the like. Examples of molded articles made of the above-described materials include plastic molded articles used for outer panels of automobiles, such as bumpers, spoilers, grilles and fenders; and outer panels of household electric appliances. Prior to application of the aqueous coating composition of the present invention, surfaces of these plastic substrates may be appropriately subjected to degreasing treatment, water washing treatment, and the like by known methods.

The aqueous coating composition of the present invention can be applied onto the object to be coated by a method known per se. As a coating machine used for applying the aqueous coating composition of the present invention, various coating machines used in known coating means such as rotary atomization coating, air spray coating, airless spray coating, curtain coating, and the like can be used without particular limitation, and a rotary atomization type coating machine and the like can be particularly preferably used from the viewpoint of coating efficiency, and finished property and the like of the coating film formed.

A coating amount of the aqueous coating composition is usually 5 to 45 μm, preferably 10 to 40 μm, more preferably 15 to 35 μm as a cured film thickness.

The coating process in which the aqueous coating composition of the present invention is used includes washing the coating machine with alkaline washing water having a pH of 9.5 or more. An alkaline component contained in the alkaline washing water having a pH of 9.5 or more is preferably an amine compound. As the amine compound, in particular, an amine compound such as monoisopropanolamine, diisopropanolamine, or dimethylethanolamine is suitably used. A pH of the alkaline washing water having a pH of 9.5 or more is preferably from 10 to 13, and more preferably from 10.5 to 12.

After application of the aqueous coating composition of the present invention using the coating machine, the resulting coating film can be set at room temperature for about 30 seconds to 60 minutes, or preheated at a temperature of about 40°C to about 80°C for about 1 to 60 minutes, or heated at a temperature of about 60°C to about 140°C, preferably about 70°C to about 120°C for about 20 to 40 minutes to be cured, as desired. Particularly, from the viewpoint of the finished property of the multilayer coating film formed, energy saving, and the like, the preheating is preferably performed.

In a case where a primer coating film formed from the aqueous coating composition has conductivity, preferably, a surface resistivity of the primer coating film (cured coating film) is generally $1 \times 10^8$ Ω/□ or less, and particularly preferably $1 \times 10^7$ Ω/□ or less. This allows for good electrostatic coating of a conductive primer coating film in the next step. Note that, here, measurement of the "surface resistivity" can be performed by drying a coating film applied to have a dry film thickness of about 15 μm at 80°C for 10 minutes, and using a surface resistance meter available from TREK, trade name "TREK MODEL 150" (unit: Ω/□).

Preferably, on the primer coating film formed from the aqueous coating composition of the present invention, a topcoat paint is subsequently applied to form a topcoat film. The topcoat film may be formed by using a color topcoat one-coat paint alone, or may be formed by sequentially applying a color basecoat paint, and a clearcoat paint. Particularly, from the viewpoint of the finished property, weather resistance, and the like of the multilayer coating film formed, it is preferable to form the topcoat film by sequentially applying the color basecoat paint and the clearcoat paint.

As the color basecoat paint, a known one can be used, and usually, a paint containing an organic solvent and/or water as a main solvent, a color component such as a color pigment, an effect pigment, or a dye, and a resin component such as a base resin or a crosslinking agent can be used. Particularly, the color basecoat paint is preferably an aqueous paint containing water as a main solvent, from the viewpoint of reduction in emission of volatile organic compounds (VOC). In a case where the color basecoat paint is an aqueous paint, a content of water in the color basecoat paint is suitably in a range of 10 to 90 mass%, particularly 20 to 80 mass%, and more particularly 30 to 70 mass%.

As the color pigment and the effect pigment used in the color basecoat paint, for example, the color pigments and the effect pigments described in the description of the pigment (E) can be used. Particularly, the color basecoat paint preferably contains a light interference pigment as at least one type of the pigment (E).

The light interference pigment is one type of the effect pigment. As the light interference pigment, for example, a pigment produced by coating a semitransparent substrate such as natural mica, artificial mica, alumina flake, silica flake, or glass flake with a metal oxide can be used.

The metal oxide-coated mica pigment is a pigment in which natural mica or artificial mica serves as a substrate and the substrate surface is coated with a metal oxide. The natural mica is a scaly substrate produced by pulverizing mica of mineral ore, and the artificial mica is synthesized by heating industrial raw materials, such as $SiO_2$, MgO, $Al_2O_3$, $K_2SiF_6$, and $Na_2SiF_6$, melting the materials at a high temperature of about 1500°C, and cooling the materials to undergo crystallization. The artificial mica contains a smaller amount of impurities and is more uniform in size and thickness in comparison with the natural mica. Specifically, fluorine mica, potassium tetrasilicon mica, sodium tetrasilicon mica, Na-taeniolite, LiNa-taeniolite, and the like are known. Examples of the coating metal oxide include titanium oxide and iron oxide. An interference color can be exhibited by the coating metal oxide.

The metal oxide-coated alumina flake pigment is a pigment in which alumina flakes serve as substrates and the substrate surface is coated with a metal oxide. The alumina flakes mean flaky (thin flaky) aluminum oxide and are colorless and transparent. The alumina flakes need not contain aluminum oxide alone and may contain an oxide of another metal. Examples of the coating metal oxide include titanium oxide and iron oxide. An interference color can be exhibited by the coating metal oxide.

The metal oxide-coated silica flake pigment is a pigment in which scaly silica, a substrate having a smooth surface and uniform thickness, is coated with a metal oxide having a refractive index different from that of the substrate.

Examples of the coating metal oxide include titanium oxide and iron oxide. An interference color can be exhibited by the coating metal oxide.

The metal oxide-coated glass flake pigment is a pigment in which a scaly glass substrate is coated with a metal oxide, and has a smooth substrate surface and thus causes strong light reflection to express granular sensation. Examples of the coating metal oxide include titanium oxide and iron oxide. An interference color can be exhibited by the coating metal oxide.

The light interference pigment may be surface-treated to improve dispersibility, water resistance, chemical resistance, weather resistance, and the like. The light interference pigments can be used alone or in combination of two or more types thereof.

In a case where the color basecoat paint contains the light interference pigment, a content of the light interference pigment is preferably in a range of 1 to 80 parts by mass and more preferably in a range of 2 to 60 parts by mass based on 100 parts by mass of total resin solid content in the color basecoat paint.

Examples of a base resin used in the color basecoat paint include a resin having a reactive functional group such as a hydroxyl group, an epoxy group, a carboxyl group, or a silanol group, for example, an acrylic resin, a polyester resin, or an alkyd resin. Examples of the crosslinking agent include amino resins such as melamine resins and urea resins, (blocked)polyisocyanates, polyepoxides, and polycarboxylic acids, each having a reactive functional group that is reactive with the functional group.

The color basecoat paint may contain, as desired, an additive for paint, such as an extender pigment, a curing catalyst, an ultraviolet absorber, a coated surface conditioner, a rheology control agent, an antioxidant, a defoaming agent, a wax, or a preservative.

The color basecoat paint is applied on the uncured or cured primer coating film described above to give a dry film thickness in a range of usually 5 to 50 μm, preferably of 5 to 30 μm, and more preferably of 10 to 20 μm; and the resulting coating film surface can be set at room temperature for approximately 1 to 60 minutes or preheated at a temperature of about 40 to about 80°C for approximately 1 to 60 minutes as desired; or alternatively the resulting coating film surface can be cured by heating at a temperature of about 60 to about 140°C and preferably of about 80 to about 120°C for approximately 20 to 40 minutes. Particularly, from the viewpoint of energy saving and the like, it is preferable to subsequently carry out coating of clearcoat without curing the color basecoat paint after coating, and from the viewpoint of the finished property and the like of the multilayer coating film formed, it is preferable to carry out the preheating after application of the color basecoat paint.

As the clearcoat paint, there can be used, for example, an organic solvent-based or aqueous thermosetting paint containing: resin components, such as a base resin and a crosslinking agent; an organic solvent, water, and/or the like; and, as desired, further containing an additive for paints, such as an ultraviolet absorber, a light stabilizer, a curing catalyst, a coating surface conditioner, a rheology control agent, an antioxidant, a defoaming agent, or a wax; and having transparency to an extent that an underlayer coating film can be visually recognized through the clearcoat film formed. Particularly, as the clearcoat paint, an organic solvent-based clearcoat paint is preferably used from the viewpoint of finished property and the like of the multilayer coating film formed.

Examples of the base resin include an acrylic resin, a polyester resin, an alkyd resin, a fluororesin, a urethane resin, or a silicon-containing resin containing at least one reactive functional group, such as a hydroxyl group, a carboxyl group, a silanol group, or an epoxy group. In particular, it is suitable to contain a hydroxyl group-containing acrylic resin. Examples of the crosslinking agent include a melamine resin, a urea resin, a (blocked)polyisocyanate compound, an epoxy compound, a carboxyl group-containing compound, an acid anhydride, and an alkoxysilane group-containing compound each having a reactive functional group that is reactive with these functional groups. In particular, it is suitable to contain a polyisocyanate compound.

The clear paint can be applied onto the uncured or cured color basecoat film to give a dry film thickness of usually 10 to 50 μm, and preferably 20 to 40 μm. The clearcoat paint can be cured by setting the resulting coating film surface at room temperature for approximately 1 to 60 minutes or preheating the resulting coating film surface at a temperature of about 40 to about 80°C for approximately 1 to 60 minutes, and then heating the resulting coating film surface at a temperature of about 60 to about 140°C and preferably of about 70 to about 120°C for approximately 20 to 40 minutes.

As described above, in a case where the aqueous coating composition of the present invention is used as an aqueous primer coating composition, a multilayer coating film in which a color basecoat film and a clear coating film are formed on a primer coating film can be formed.

For a preferred aspect of such a method of forming a multilayer coating film, it is possible to use a method of forming a multilayer coating film including:

(1) applying an aqueous primer coating composition onto an object to be coated to form an uncured primer coating film;
(2) applying an aqueous basecoat composition onto the uncured primer coating film to form an uncured basecoat film;
(3) applying a clearcoat composition onto the uncured basecoat film to form an uncured clearcoat film; and

(4) heating and curing the uncured primer coating film, the uncured basecoat film, and the uncured clearcoat film simultaneously, in which

the aqueous coating composition of the present invention is applied as the aqueous primer coating composition.

In the method for forming a multilayer coating film, setting or preheating may be carried out, as needed, after application of the aqueous primer coating composition, the aqueous basecoat composition, and the clearcoat composition. The setting is preferably performed by allowing the coating films to stand at room temperature for about 1 to 20 minutes. The heating temperature in the preheating is preferably in a range of 30 to 85°C, and more preferably in a range of 40 to 80°C. The heating time is preferably in a range of 1 to 60 minutes and more preferably in a range of 1 to 20 minutes.

Particularly, in the step (1), after application of the aqueous primer coating composition, the setting or the preheating is preferably performed, and the preheating is more preferably performed.

In the step (2), it is preferable to perform the preheating after application of the aqueous basecoat composition.

In the step (3), it is preferable to perform the setting after application of the clearcoat composition.

In the step (4), the heating temperature at which the multilayer coating film is heated and cured is preferably in a range of 80 to 140°C, and more preferably in a range of 100 to 130°C. Particularly, the heating temperature is preferably in a range from 110 to 125°C, and particularly preferably in a range from 115 to 125°C. The heating time for which the multilayer coating film is heated and cured is preferably in a range of 10 to 60 minutes and more preferably in a range of 20 to 40 minutes.

In a case where the aqueous coating composition of the present invention is used as the aqueous primer coating composition, a multilayer coating film having an excellent finished property can be formed even when the aqueous basecoat composition and the clearcoat composition are applied onto the uncured primer coating film formed by the aqueous coating composition.

It is not necessarily clear why a multilayer coating film excelling in finished property can be formed even when top coating with an aqueous coating composition in the subsequent step is performed in an uncured state of the aqueous coating composition of the present invention after applied and in addition, washability of a coating machine used for the application is excellent. However, it is presumed that the aqueous coating composition of the present invention contains the aqueous polyolefin-based resin (A) and the acrylic resin (B) having an anionic group and a polyoxyalkylene group, and thus, has relatively high solubility in the alkaline washing water to be excellent in washability of the coating machine and there is relatively little water transfer from the aqueous coating composition of the upper layer to the primer coating film to form a multilayer coating film having an excellent finished property.

## Examples

The present invention will be described more specifically below through Examples and Comparative Examples. However, the present invention is not limited to the following examples only. Note that both "parts" and "%" are based on mass and the film thickness of the coating film is based on a cured coating film.

In examples and comparative examples, the following components were used.

### <Aqueous Polyolefin-based Resin (A)>

· Aqueous polyolefin-based resin modified with maleic acid (A-1) melting point: 95°C, weight average molecular weight (Mw): 90000

· Aqueous polyolefin-based resin modified with maleic acid (A-2) melting point: 80°C, weight average molecular weight (Mw): 90000

### <Production of Acrylic Resin (B) Having Anionic Group and Polyoxyalkylene Group>

### Production Example 1

A reactor equipped with a stirrer, a thermometer, a reflux condenser, and the like was charged with 40 parts of ethylene glycol monobutyl ether and 30 parts of isobutyl alcohol, followed by heating and stirring. After the temperature reached 100°C, a mixture of the following monomers and the like was added dropwise over 3 hours.

Acrylic acid 5 parts

"MPEG2000MA" (trade name, available from Evonik Japan Co., Ltd., methoxypolyethylene glycol methacrylate, molecular weight of about 2000, 50% aqueous dilution) 30 parts (solid content of 15 parts)

| | |
|---|---|
| Isobornyl acrylate | 35 parts |
| n-butyl methacrylate | 20 parts |
| Methyl methacrylate | 15 parts |
| 2-hydroxyethyl methacrylate | 10 parts |
| 2,2'-azobisisobutyronitrile | 1 part |
| Isobutyl alcohol | 5 parts |

After completion of the dropwise addition, the mixture was further maintained at 100°C. for 30 minutes, and then an additional catalyst solution which was a mixture of 0.5 parts of 2,2'-azobisisobutyronitrile and 10 parts of ethylene glycol monobutyl ether was added dropwise over 1 hour. Stirring was further continued at 100°C for 1 hour, followed by cooling, addition of 15 parts of isobutyl alcohol, addition of 4 parts of N,N-dimethylaminoethanol when the temperature reached 75°C, and stirring for 30 minutes to obtain a solution of an acrylic resin (B-1) having an anionic group and a polyoxyalkylene group with a solid content of 50%. The acid value of the acrylic resin (B-1) having an anionic group and a polyoxyalkylene group was 39 mg KOH/g, the hydroxyl value thereof was 43 mg KOH/g, and the weight average molecular weight thereof was 50000.

Production Examples 2 to 14

Synthesis was performed in the same manner as in Production Example 1 except that the formulation of monomers in Production Example 1 was changed to those listed in Tables 1 and 2 below to obtain acrylic resins (B-2) to (B-14). Among them, the acrylic resins (B-2) to (B-12) correspond to solutions of the acrylic resin (B) having an anionic group and a polyoxyalkylene group.

[Table 1]

Table 1

| | | | Production Examples | | | | | | |
|---|---|---|---|---|---|---|---|---|---|
| | | | 1 | 2 | 3 | 4 | 5 | 6 | 7 |
| Name of solution of acrylic resin (B) having an anionic group and a polyoxyalkylene group | | | B-1 | B-2 | B-3 | B-4 | B-5 | B-6 | B-7 |
| Polymerizable unsaturated monomer (b1) having anionic group | | Acrylic acid | 5 | 2 | 4 | 7 | 9 | 5 | 5 |
| Polymerizable unsaturated monomer (b2) having polyoxyalkylene group; | | "MPEG2000MA" | 15 | 15 | 15 | 15 | 15 | 6 | 10 |
| Other polymerizable unsaturated monomer (b3) | Polymerizable unsaturated monomer (b31) having hydrophobic group | Isobornyl acrylate | 35 | 35 | 35 | 35 | 35 | 35 | 35 |
| | | n-butyl methacrylate | 20 | 20 | 20 | 20 | 20 | 20 | 20 |
| | | Methyl methacrylate | 15 | 18 | 16 | 13 | 11 | 24 | 20 |
| | | Hydroxyethyl methacrylate | 10 | 10 | 10 | 10 | 10 | 10 | 10 |
| Total amount of monomers [parts by mass] | | | 100 | 100 | 100 | 100 | 100 | 100 | 100 |
| Weight ratio of monomer (b1)/monomer (b2) | | | 25/75 | 12/88 | 21/79 | 32/68 | 38/62 | 45/55 | 33/67 |
| Acid value (mg KOH/g) | | | 39 | 16 | 31 | 55 | 70 | 39 | 39 |
| Hydroxyl value [mg KOH/g] | | | 43 | 43 | 43 | 43 | 43 | 43 | 43 |
| Weight average molecular weight | | | 50000 | 50000 | 50000 | 50000 | 50000 | 50000 | 50000 |

[Table 2]

Table 2

| [Table 2]Table 2 | | | Production Examples | | | | | | |
|---|---|---|---|---|---|---|---|---|---|
| | | | 8 | 9 | 10 | 11 | 12 | 13 | 14 |
| Name of solution of acrylic resin (B) having anionic group and polyoxyalkylene group | | | B-8 | B-9 | B-10 | B-11 | B-12 | B-13 | B-14 |
| Polymerizable unsaturated monomer (b1) having anionic group | | Acrylic acid | 5 | 5 | 5 | 5 | 5 | | 5 |
| Polymerizable unsaturated monomer (b2) having polyoxyalkylene group; | | "MPEG2000MA" | 20 | 25 | 15 | 15 | 15 | 15 | |
| Another polymerizable unsaturated monomer (b3) | Polymerizable unsaturated monomer (b31) having hydrophobic group | Isobornyl acrylate | 35 | 35 | 25 | 50 | 65 | 35 | 35 |
| | | n-butyl methacrylate | 20 | 20 | 20 | 10 | 0 | 20 | 20 |
| | | Methyl methacrylate | 10 | 5 | 25 | 10 | 5 | 20 | 30 |
| | | Hydroxyethyl methacrylate | 10 | 10 | 10 | 10 | 10 | 10 | 10 |
| Total amount of monomers [parts by mass] | | | 100 | 100 | 100 | 100 | 100 | 100 | 100 |
| Weight ratio of monomer (b1)/monomer (b2) | | | 20/80 | 17/83 | 25/75 | 25/75 | 25/75 | 0/100 | 100/0 |
| Acid value (mg KOH/g) | | | 39 | 39 | 39 | 39 | 39 | 0 | 39 |
| Hydroxyl value [mg KOH/g] | | | 43 | 43 | 43 | 43 | 43 | 43 | 43 |
| Weight average molecular weight | | | 50000 | 50000 | 50000 | 50000 | 50000 | 50000 | 50000 |

<Production of Hydroxyl Group-Containing Polyester Resin (C)>

Production Example 15

A reaction vessel equipped with a thermometer, a thermostat, a stirrer, a reflux condenser, and a water separator was charged with 174 parts of trimethylolpropane, 327 parts of neopentyl glycol, 352 parts of adipic acid, 109 parts of isophthalic acid, and 101 parts of 1,2-cyclohexane dicarboxylic anhydride, and the temperature was raised from 160°C to 230°C over 3 hours. Then, while produced condensed water was distilled off using the water separator, the temperature was maintained at 230°C, and the mixture was reacted until the acid value reached 3 mg KOH/g or less. To this reaction product, 59 parts of trimellitic anhydride were added, the mixture was subjected to an addition reaction at 170°C for 30 minutes, after which the mixture was cooled to 50°C or lower, and 2-(dimethylamino)ethanol was added in an amount equivalent to the acid groups to neutralize the mixture. Then, deionized water was gradually added to obtain a hydroxyl group-containing polyester resin (C-1) solution having a solid content concentration of 45% and a pH of 7.2. The resulting hydroxyl group-containing polyester resin (C-1) had an acid value of 35 mg KOH/g, a hydroxyl value of 128 mg KOH/g, and a number average molecular weight of 1480.

Production Example 16

To a reactor equipped with a thermometer, a thermostat, a stirrer, a heater, and a rectifier, 18.9 parts of isophthalic acid, 32.4 parts of adipic acid, 0.7 parts of maleic anhydride, 40.3 parts of 1,6-hexanediol, and 5.2 parts of trimethylolpropane were charged, and the temperature was raised to 160°C while stirring. Then, the temperature of the contents was gradually raised from 160°C to 230°C over 3.5 hours, and the produced condensed water was distilled off through the rectifier. After the reaction was continued at 230°C for 90 minutes, the rectifier was replaced with a water separator, about 4 parts of toluene was added to the contents, and water and toluene were azeotropically distilled to remove condensed water. Measurement of the acid value was started one hour after the addition of toluene, and when it was confirmed that the acid value reached less than 6, heating was stopped, toluene was removed under reduced pressure, then 20 parts of dipropylene glycol monomethyl ether was added for dilution, and 2.1 parts of methoxypolyethylene glycol methacrylate (Mw 1000) was added. Then, the reaction solution was cooled to 130°C, and a mixture of 3 parts of styrene, 3.3 parts of acrylic acid, 6.6 parts of n-butyl acrylate, and 0.75 parts of t-butylperoxy-2-ethylhexanoate was added dropwise over 30 minutes. Thereafter, the mixture was aged at 130°C for 30 minutes, 0.05 parts of t-butylperoxy-2-ethylhexanoate was added as an additional catalyst, and the mixture was further aged for 1 hour. Subsequently, the reaction solution was cooled to 85°C, neutralized with dimethylethanolamine, and dispersed with deionized water to obtain an aqueous dispersion of a hydroxyl group-containing polyester resin (C-2) modified with an acrylic resin and having a solid content of 40%. The resulting acrylic-modified hydroxyl group-containing polyester resin (C-2) had an acid value of 30 mg KOH/g, a hydroxyl value of 68 mg KOH/g, and a number average molecular weight of 3000 (number average molecular weight of polyester portion of 1850).

<Crosslinking Agent (D)/Melamine Resin>

· Melamine resin (D-1): "U-VAN 28-60", available from Mitsui Chemicals, Inc., butyl-etherified melamine resin was used.
· Melamine resin (D-2): "CYMEL 325", available from Allnex Japan Inc., methyl-etherified melamine resin was used.

<Crosslinking Agent (D)/Blocked Polyisocyanate Compound>

Production Example 17

To a reaction vessel equipped with a thermometer, a thermostat, a stirrer, a reflux condenser, a nitrogen-introducing tube, a dropping device, and a simple trap for solvent removal, 360 parts of "Sumidur N-3300" (trade name, available from Sumika Covestro Urethane Co., Ltd., isocyanurate product of hexamethylene diisocyanate, solid content of 100%, isocyanurate group content of 21.8%), 60 parts of "UNIOX M-550" (trade name, available from NOF Corporation, polyethylene glycol monomethyl ether, average molecular weight of about 550), and 0.2 parts of 2,6-di-tert-butyl-4-methylphenol were charged, and contents in the reaction vessel were heated at 130°C for 3 hours under a nitrogen stream while thoroughly mixing the contents. Next, 110 parts of ethyl acetate and 252 parts of diisopropyl malonate were charged into the reaction vessel, 3 parts of a 28% methanol solution of sodium methoxide was added to the reaction vessel while stirring the contents under a nitrogen stream, and the contents in the reaction vessel were stirred at 65°C

for 8 hours. An amount of isocyanate in the resulting resin solution was 0.12 mol/kg. To the resin solution, 683 parts of 4-methyl-2-pentanol was added, and the solvent was distilled off over 3 hours under reduced pressure while maintaining the temperature of the system at 80 to 85°C to obtain 1010 parts of a blocked polyisocyanate compound (D-3) solution. The simple trap for solvent removal contained 95 parts of isopropanol. A solid content concentration of the obtained blocked polyisocyanate compound (D-3) was about 60%.

<Pigment (E)>

White pigment: rutile-type titanium dioxide pigment (trade name "JR-806", available from TAYCA CORPORATION)
Red pigment: organic red pigment (trade name "FASTOGEN SUPER RED YE", available from DIC Corporation)

<Diester Compound (F)>

Diester compound (F-1): a diester compound of polyoxyethylene glycol and n-hexanoic acid was used. In the compound represented by the general formula (1), $R^1$ and $R^2$ are each a pentyl group, $R^3$ is an ethylene group, m is 5, and the molecular weight is 434.

Diester compound (F-2): a diester compound of polyoxyethylene glycol and 2-ethylhexanoic acid was used. In the compound represented by the general formula (1), $R^1$ and $R^2$ are each a 2-ethylpentyl group, $R^3$ is an ethylene group, m is 7, and the molecular weight is 578.

<Phosphate Compound (G)>

Phosphate compound (G-1): In the general formula (2), $R^4$ is a branched alkyl group having 7 carbon atoms, and $R^5$ is an ethylene group. In addition, x is 1 or 2, and the ratio of the monoester compound of x = 1 to the diester compound of x = 2 is 1 : 1. Furthermore, y is 1. Number average molecular weight is 311. HLB is 5.5.

Examples 1 to 26, Comparative Examples 1, 2, and Reference Examples 1, 2

<Production of Aqueous Coating Composition>

Example 1

44 parts (resin solid content of 20 parts) of the hydroxyl group-containing polyester resin (C-1) solution produced in Production Example 15, 150 parts of "JR-806" (trade name, available from TAYCA CORPORATION, rutile-type titanium dioxide), and 20 parts of deionized water were mixed, and pH was adjusted to 8.5 with 2-(dimethylamino)ethanol. Then, the mixture was dispersed using a paint shaker for 30 minutes to obtain a pigment dispersion paste. Then, the obtained pigment dispersion paste and the components (A) to (G) were mixed at blending proportions (parts by mass of solid content) listed in Table 3 below, and sufficiently stirred with a mixer. To the resulting mixture were then added "PRIMAL ASE-60" (trade name, available from The Dow Chemical Company, a thickener), 2-(dimethylamino)ethanol, and deionized water, to obtain an aqueous coating composition No. 1 with pH 8.7, a solid content of 48%, and a viscosity of 1300 mPa•s when measured at 23°C using a B-type viscometer after rotation for one minute at a rotational speed of 6 rpm.

Examples 2 to 26 and Comparative Examples 1 to 2

Aqueous coating composition Nos. 2 to 28 with pH 8.7 and a viscosity of 1300 mPa•s when measured at 23°C using a B-type viscometer after rotation for one minute at a rotational speed of 6 rpm were obtained in the same manner as in Example 1 except that blending proportions (parts by mass of solid content) and the solid content concentration were as listed in Tables 3 to 5 below. Note that in Example 25, polypropylene glycol (trade name "SANNIX GP-1000" available from Sanyo Chemical Industries, Ltd.) was used instead of the diester compound (F).

<Preparation of Coated Sheet for Testing>

Examples 1 to 16 and 18 to 26 and Comparative Examples 1 to 2

After degreasing a polypropylene sheet, each of the aqueous coating compositions prepared as described

above was applied onto the polypropylene sheet by rotary atomization to give a cured film thickness of 30 μm. Next, the obtained coating film was allowed to stand at room temperature for 3 minutes for setting, and then preheated at 60°C for 3 minutes to form a primer coating film.

Next, "WBC-713T No. 062" (available from Kansai Paint Co., Ltd., an aqueous basecoat composition containing a light interference pigment) was non-electrostatically applied onto the uncured primer coating film to give a cured film thickness of 15 μm, allowed to be set at room temperature for 2 minutes, and preheated at 80°C for 3 minutes to form an interference color basecoat film. Subsequently, as a clearcoat composition, "Soflex 7175" (available from Kansai Paint Co., Ltd., an acrylic resin-urethane resin-based thermosetting clear coat composition) was non-electrostatically applied onto the uncured interference color basecoat film to give a cured film thickness of 25 μm, and allowed to stand at room temperature for 7 minutes for setting to form a clearcoat film. Then, the primer coating film, the interference color basecoat film, and the clearcoat film were simultaneously heated at 120°C for 30 minutes and cured to prepare a coated sheet for testing.

Example 17

A coated sheet for testing was prepared in the same manner as in Example 1 except that the aqueous coating composition No. 17 was used as the aqueous coating composition, the aqueous coating composition No. 17 was applied by rotary atomization to give a cured film thickness of 15 μm, and "WBC-713T No. 3R3" (available from Kansai Paint Co., Ltd., red and aqueous basecoat composition) was used as the aqueous basecoat composition.

<Performance Tests>

Each of the aqueous coating composition and each of the coated sheets for testing prepared as described above were subjected to the following performance test. The results are listed in Tables 3 to 5.

Washability of coating machine:

In a bell-type coating machine, which is a rotary atomization type automatic coating machine, available from Trinity Industrial Corp., a 2-piece bell having a diameter of 40 mm was used to repeat 120 cycles of applying each of the aqueous coating compositions under discharge conditions of a rotation speed of 20000 rpm, a shaping air pressure of 2.5 $kg/cm^2$, and an application amount of 300 mL/min for 5 seconds and leaving the coating machine for 20 seconds. Thereafter, alkaline washing water having pH = 11 (deionized water/ethylene glycol butylether/isopropanol/monoisopanolamine = 90/4/5/1 (mass ratio)) was applied for 2 seconds under the discharge conditions described above, and then a state of the paint remaining in a groove of the bell was evaluated.

For the aqueous coating compositions obtained in Examples 1 and 17, evaluation was also performed in a case of using alkaline washing water having pH = 10 (deionized water/alkaline washing water having pH = 11 described above = 95/5 (mass ratio)) or alkaline washing water having pH = 9 (deionized water/alkaline washing water with pH = 11 described above = 99.9/0.1 (mass ratio)) as the alkaline washing water. The evaluation results in the case of using the alkaline washing water having pH = 9 are listed in Table 5 as Reference Examples 3 and 4.

◎: No residual paint is observed in the bell groove.
◦: Slight residue of the paint is observed in the bell groove.
×: A considerable amount of the paint remained is observed in the bell groove.

Finished property (smoothness):

Each coated sheet for testing was evaluated using a Wd value measured by a "Wave Scan DOI" (trade name, available from BYK-Gardner GmbH). A smaller Wd value indicates higher smoothness of the coating surface. The Wd value is preferably as small as possible, and it is necessary to satisfy a condition of 30 or less.

Weather resistance:

Each coated sheet for testing was subjected to an accelerated weathering test in accordance with JIS K 5600-7-7 using a "Super Xenon Weather Meter" (available from Suga Test Instruments Co., Ltd., weathering tester) under the following test conditions.

(Test conditions)

Irradiance: 180 $W/m^2$ (wave length range: from 300 to 400 nm)
Black panel temperature: 63 ± 2°C
Test piece wetting cycle: Cycle A: continuous operation, 2-hour cycle of 18 min (wetting time)/102 min (drying time), irradiation not interrupted during wetting, relative humidity during drying of 40 to 60%
Irradiation time: 1600 hours

Grid-like cut was made on the multilayer coating film of the test sheet by a utility knife in a manner that the cut reached the base material, and thus a grid of 100 pieces each having a size of 2 mm × 2 mm was made. Then, a cellophane adhesive tape was adhered to the surface. The adhesive tape was quickly peeled off, then a remaining state of the cross-cut coating films was examined.

◎: 100 pieces of the cross-cut coating films remained, and no small edge chipping of the coating films occurred at the edge of the cut by the utility knife.
◦: 100 pieces of the cross-cut coating films remained, but small edge chipping of the coating films occurred at edges of the cut by the utility knife.
△: 90 to 99 of the cross-cut coating films remained.
×: The number of pieces of the remaining cross-cut coating films is 89 or less.

[Table 3]

Table 3

| | | | | Examples | | | | | | | | | |
|---|---|---|---|---|---|---|---|---|---|---|---|---|---|
| | | | | 1 | 2 | 3 | 4 | 5 | 6 | 7 | 8 | 9 | 10 |
| Name of aqueous coating composition (No.) | | | | 1 | 2 | 3 | 4 | 5 | 6 | 7 | 8 | 9 | 10 |
| Pigment dispersion paste | Hydroxyl group-containing polyester resin (C) | | Hydroxyl group-containing polyester resin (C-1) | 20 | 20 | 20 | 20 | 20 | 20 | 20 | 20 | 20 | 20 |
| | | | Acrylic-modified hydroxyl group-containing polyester resin (C-2) | | | | | | | | | | |
| | Acrylic resin (B) having anionic group and polyoxyalkylene group | | Acrylic resin (B-1) having anionic group and polyoxyalkylene group | | | | | | | | | | |
| | Pigment (E) | Titanium dioxide pigment | "JR-806" | 150 | 150 | 150 | 150 | 150 | 150 | 150 | 150 | 150 | 150 |
| | | Organic red pigment | "FASTOGEN SUPER RED YE" | | | | | | | | | | |
| Aqueous polyolefin-based resin (A) | | | Aqueous polyolefin-based resin (A-1) | 26 | | 26 | 26 | 26 | 26 | 26 | 26 | 26 | 26 |
| | | | Aqueous polyolefin-based resin (A-2) | | 26 | | | | | | | | |
| Acrylic resin (B) having anionic group and polyoxyalkylene group | | | Product name | B-1 | B-1 | B-2 | B-3 | B-4 | B-5 | B-6 | B-7 | B-8 | B-9 |
| | | | Content | 14 | 14 | 14 | 14 | 14 | 14 | 14 | 14 | 14 | 14 |
| Hydroxyl group-containing polyester resin (C) | | | Hydroxyl group-containing polyester resin (C-1) | | | | | | | | | | |
| Crosslinking agent (D) | | Melamine resin | Melamine resin (D-1) | 10 | 10 | 10 | 10 | 10 | 10 | 10 | 10 | 10 | 10 |
| | | | Melamine resin (D-2) | | | | | | | | | | |
| | | Blocked polyisocyanate compound | Blocked polyisocyanate compound (D-3) | 15 | 15 | 15 | 15 | 15 | 15 | 15 | 15 | 15 | 15 |

(continued)

| | | | Examples | | | | | | | | | |
|---|---|---|---|---|---|---|---|---|---|---|---|---|
| | | | 1 | 2 | 3 | 4 | 5 | 6 | 7 | 8 | 9 | 10 |
| Name of aqueous coating composition (No.) | | | 1 | 2 | 3 | 4 | 5 | 6 | 7 | 8 | 9 | 10 |
| Additional component | Diester compound (F) | Diester compound (F-1) | 15 | 15 | 15 | 15 | 15 | 15 | 15 | 15 | 15 | 15 |
| | | Diester compound (F-2) | | | | | | | | | | |
| | Polypropylene glycol | "SANNIX GP1000" | | | | | | | | | | |
| | Phosphate compound (G) | Phosphate compound (G-1) | | | | | | | | | | |
| Solid content concentration of aqueous coating composition [mass%] | | | 48 | 48 | 48 | 48 | 48 | 48 | 48 | 48 | 48 | 48 |
| Evaluation result | Washability of coating machine | pH = 11 | ◎ | ◎ | ○ | ◎ | ◎ | ◎ | ○ | ◎ | ◎ | ◎ |
| | | pH = 10 | ◎ | - | - | - | - | - | - | - | - | - |
| | | pH = 9 | - | - | - | - | - | - | - | - | - | - |
| | Finished property (smoothness) | | 25 | 25 | 23 | 25 | 26 | 28 | 22 | 24 | 26 | 29 |
| | Weather resistance | | ◎ | ◎ | ◎ | ◎ | ◎ | ◎ | ◎ | ◎ | ◎ | ◎ |

[Table 4]

Table 4

| | | | | Examples | | | | | | | | | |
|---|---|---|---|---|---|---|---|---|---|---|---|---|---|
| | | | | 11 | 12 | 13 | 14 | 15 | 16 | 17 | 18 | 19 | 20 |
| Name of aqueous coating composition (No.) | | | | 11 | 12 | 13 | 14 | 15 | 16 | 17 | 18 | 19 | 20 |
| Pigment dispersion paste | Hydroxyl group-containing polyester resin (C) | | Hydroxyl group-containing polyester resin (C-1) | 20 | 20 | 20 | 20 | 16 | 20 | 20 | 13 | 9 | |
| | | | Acrylic-modified hydroxyl group-containing polyester resin (C-2) | | | | | | | | | | 20 |
| | Acrylic resin (B) having anionic group and polyoxyalkylene group; | | Acrylic resin (B-1) having anionic group and polyoxyalkylene group | | | | | | | | | 11 | |
| | Pigment (E) | Titanium dioxide pigment | "JR-806" | 150 | 150 | 150 | 150 | 120 | 200 | | 150 | 150 | 150 |
| | | Organic red pigment | "FASTOGEN SUPER RED YE" | | | | | | | 26 | | | |
| Aqueous polyolefin-based resin (A) | | | Aqueous polyolefin-based resin (A-1) | 26 | 26 | 26 | 20 | 30 | 26 | 26 | 26 | 26 | 26 |
| | | | Aqueous polyolefin-based resin (A-2) | | | | | | | | | | |
| Acrylic resin (B) having anionic group and polyoxyalkylene group | | | Product name | B-10 | B-11 | B-12 | B-1 | B-1 | B-1 | B-1 | B-1 | B-1 | B-1 |
| | | | Content | 14 | 14 | 14 | 11 | 17 | 14 | 14 | 21 | 14 | 14 |
| Hydroxyl group-containing polyester resin (C) | | | Hydroxyl group-containing polyester resin (C-1) | | | | 7 | | | | | | |
| Crosslinking agent (D) | | Melamine resin | Melamine resin (D-1) | 10 | 10 | 10 | 10 | 10 | 10 | 10 | 10 | 10 | 10 |
| | | | Melamine resin (D-2) | | | | | | | | | | |
| | | Blocked polyisocyanate compound | Blocked polyisocyanate compound (D-3) | 15 | 15 | 15 | 15 | 15 | 15 | 15 | 15 | 15 | 15 |

(continued)

| | | | Examples | | | | | | | | | |
|---|---|---|---|---|---|---|---|---|---|---|---|---|
| | | | 11 | 12 | 13 | 14 | 15 | 16 | 17 | 18 | 19 | 20 |
| Name of aqueous coating composition (No.) | | | 11 | 12 | 13 | 14 | 15 | 16 | 17 | 18 | 19 | 20 |
| Additional component | Diester compound (F) | Diester compound (F-1) | 15 | 15 | 15 | 17 | 12 | 15 | 15 | 15 | 15 | 15 |
| | | Diester compound (F-2) | | | | | | | | | | |
| | Polypropylene glycol | "SANNIX GP1000" | | | | | | | | | | |
| | Phosphate compound (G) | Phosphate compound (G-1) | | | | | | | | | | |
| Solid content concentration of aqueous coating composition [mass%] | | | 48 | 48 | 48 | 48 | 48 | 48 | 35 | 48 | 48 | 48 |
| Evaluation result | Washability of coating machine | pH = 11 | ◎ | ◎ | ○ | ◎ | ○ | ○ | ◎ | ◎ | ◎ | ◎ |
| | | pH = 10 | - | - | - | - | - | - | ◎ | - | - | - |
| | | pH = 9 | - | - | - | - | - | - | - | - | - | - |
| | Finished property (smoothness) | | 30 | 25 | 22 | 22 | 25 | 25 | 19 | 28 | 29 | 26 |
| | Weather resistance | | ◎ | ◎ | ◎ | ◎ | ◎ | ◎ | ◎ | ◎ | ◎ | ◎ |

[Table 5]

Table 5

| | | | | Examples | | | | | | Comparative Examples | | Reference Examples | |
|---|---|---|---|---|---|---|---|---|---|---|---|---|---|
| | | | | 21 | 22 | 23 | 24 | 25 | 26 | 1 | 2 | 3 | 4 |
| Name of aqueous coating composition (No.) | | | | 21 | 22 | 23 | 24 | 25 | 26 | 27 | 28 | 1 | 17 |
| Pigment dispersion paste | Hydroxyl group-containing polyester resin (C) | | Hydroxyl group-containing polyester resin (C-1) | 20 | 20 | 20 | 20 | 20 | 20 | 20 | 20 | 20 | 20 |
| | | | Acrylic-modified hydroxyl group-containing polyester resin (C-2) | | | | | | | | | | |
| | Acrylic resin (B) having anionic group and polyoxyalkylene group | | Acrylic resin (B-1) having anionic group and polyoxyalkylene group | | | | | | | | | | |
| | Pigment (E) | Titanium dioxide pigment | "JR-806" | 150 | 150 | 150 | 150 | 150 | 200 | 150 | 150 | 150 | |
| | | Organic red pigment | "FASTOGEN SUPER RED YE" | | | | | | | | | | 26 |
| Aqueous polyolefin-based resin (A) | | | Aqueous polyolefin-based resin (A-1) | 26 | 26 | 26 | 26 | 26 | 26 | 26 | 26 | 26 | 26 |
| | | | Aqueous polyolefin-based resin (A-2) | | | | | | | | | | |
| Acrylic resin (B) having anionic group and polyoxyalkylene group | | | Product name | B-1 | B-1 | B-1 | B-1 | B-1 | B-1 | B-13 | B-14 | B-1 | B-1 |
| | | | Content | 14 | 14 | 14 | 14 | 14 | 14 | 14 | 14 | 14 | 14 |
| Hydroxyl group-containing polyester resin (C) | | | Hydroxyl group-containing polyester resin (C-1) | | | | | | | | | | |
| Crosslinking agent (D) | Melamine resin | | Melamine resin (D-1) | | 25 | | 10 | 10 | 10 | 10 | 10 | 10 | 10 |
| | | | Melamine resin (D-2) | 10 | | | | | | | | | |

(continued)

| | | | | Examples | | | | | | Comparative Examples | | Reference Examples | |
|---|---|---|---|---|---|---|---|---|---|---|---|---|---|
| | | | | 21 | 22 | 23 | 24 | 25 | 26 | 1 | 2 | 3 | 4 |
| Name of aqueous coating composition (No.) | | | | 21 | 22 | 23 | 24 | 25 | 26 | 27 | 28 | 1 | 17 |
| | Blocked polyisocyanate compound | Blocked polyisocyanate compound (D-3) | 15 | | 25 | 15 | 15 | 15 | 15 | 15 | 15 | 15 | |
| Additional component | Diester compound (F) | Diester compound (F-1) | 15 | 15 | 15 | | | 15 | 15 | 15 | 15 | 15 | |
| | | Diester compound (F-2) | | | | 15 | | | | | | | |
| | Polypropylene glycol | "SANNIX GP1000" | | | | | 15 | | | | | | |
| | Phosphate compound (G) | Phosphate compound (G-1) | | | | | | 0.3 | | | | | |
| Solid content concentration of aqueous coating composition [mass%] | | | 48 | 48 | 48 | 48 | 48 | 48 | 48 | 48 | 48 | 35 | |
| Evaluation result | Washability of coating machine | pH = 11 | ◎ | ◎ | ◎ | ◎ | ◎ | ◎ | × | × | - | - | |
| | | pH = 10 | - | - | - | - | - | - | - | - | - | - | |
| | | pH = 9 | - | - | - | - | - | - | - | - | × | × | |
| | Finished property (smoothness) | | 22 | 29 | 25 | 26 | 30 | 25 | 26 | 25 | 25 | 19 | |
| | Weather resistance | | ○ | ◎ | ◎ | ◎ | ◎ | ◎ | ◎ | ◎ | ◎ | ◎ | |

Although embodiments and examples of the present invention have been specifically described above, the present invention is not limited to the embodiments described above, and various modifications based on the technical idea of the present invention are possible.

## Claims

1. An aqueous coating composition for use in a coating process including

   (1) applying the aqueous coating composition onto an object to be coated using a coating machine, and
   (2) washing the coating machine using alkaline washing water having a pH of 9.5 or more,

   the aqueous coating composition comprising: an aqueous polyolefin-based resin (A); and an acrylic resin (B) having an anionic group and a polyoxyalkylene group.

2. The aqueous coating composition according to claim 1, wherein the coating machine is a rotary atomization type coating machine.

3. The aqueous coating composition according to claim 1 or 2, wherein the alkaline washing water having the pH of 9.5 or more contains an amine compound.

4. The aqueous coating composition according to any one of claims 1 to 3, wherein a solid content of the aqueous polyolefin-based resin (A) is in a range of 10 to 45 parts by mass based on 100 parts by mass of a resin solid content in the aqueous coating composition.

5. The aqueous coating composition according to any one of claims 1 to 4, wherein the acrylic resin (B) having the anionic group and the polyoxyalkylene group is a copolymer including a polymerizable unsaturated monomer (b 1) having an anionic group, a polymerizable unsaturated monomer (b2) having a polyoxyalkylene group, and another polymerizable unsaturated monomer (b3) as copolymerizable monomer components, a use proportion of the polymerizable unsaturated monomer (b 1) having the anionic group is in a range of 2 to 10 mass% based on a total amount of the copolymerizable monomer components, a use proportion of the polymerizable unsaturated monomer (b2) having the polyoxyalkylene group is in a range of 5 to 20 mass% based on the total amount of the copolymerizable monomer components, and a mass ratio of the polymerizable unsaturated monomer (b 1) having the anionic group/the polymerizable unsaturated monomer (b2) having the polyoxyalkylene group is in a range of (b 1)/(b2) = 10/90 to 50/50.

6. The aqueous coating composition according to claim 5, wherein the other polymerizable unsaturated monomer (b3) includes a polymerizable unsaturated monomer (b31) having a hydrophobic group, and a use proportion of the polymerizable unsaturated monomer (b31) having the hydrophobic group is in a range of 25 to 60 mass% based on the total amount of the copolymerizable monomer components.

7. The aqueous coating composition according to any one of claims 1 to 6, wherein an acid value of the acrylic resin (B) having the anionic group and the polyoxyalkylene group is in a range of 20 to 50 mg KOH/g.

8. The aqueous coating composition according to any one of claims 1 to 7, wherein a solid content of the acrylic resin (B) having the anionic group and the polyoxyalkylene group is in a range of 5 to 40 parts by mass based on 100 parts by mass of a resin solid content in the aqueous coating composition.

9. The aqueous coating composition according to any one of claims 1 to 8, further comprising a hydroxyl group-containing polyester resin (C), wherein a solid content of the hydroxyl group-containing polyester resin (C) is in a range of 10 to 45 parts by mass based on 100 parts by mass of a resin solid content in the aqueous coating composition.

10. The aqueous coating composition according to any one of claims 1 to 9, further comprising a crosslinking agent (D), wherein a content of the crosslinking agent (D) is in a range of 3 to 45 parts by mass based on 100 parts by mass of a resin solid content in the aqueous coating composition.

11. The aqueous coating composition according to any one of claims 1 to 10, further comprising a pigment (E), wherein a content of the pigment (E) is in a range of 10 to 200 parts by mass based on 100 parts by mass of a resin solid

content in the aqueous coating composition.

**12.** A coated article having a cured coating film produced by curing the aqueous coating composition according to any one of claims 1 to 11 on the object to be coated.

**13.** A method of forming a multilayer coating film, the method comprising:

(1) applying an aqueous primer coating composition onto the object to be coated to form an uncured primer coating film;
(2) applying an aqueous basecoat composition onto the uncured primer coating film to form an uncured basecoat film;
(3) applying a clearcoat composition onto the uncured basecoat film to form an uncured clearcoat film; and
(4) heating and curing the uncured primer coating film, the uncured basecoat film, and the uncured clearcoat film simultaneously, wherein

the aqueous coating composition according to any one of claims 1 to 11 is applied as the aqueous primer coating composition.

## INTERNATIONAL SEARCH REPORT

International application No.
**PCT/JP2022/024592**

**A. CLASSIFICATION OF SUBJECT MATTER**

***B05D 1/36***(2006.01)i; ***C08F 290/06***(2006.01)i; ***C09D 123/02***(2006.01)i; ***C09D 133/14***(2006.01)i
FI: C09D123/02; B05D1/36 B; C09D133/14; C08F290/06

According to International Patent Classification (IPC) or to both national classification and IPC

**B. FIELDS SEARCHED**

Minimum documentation searched (classification system followed by classification symbols)

B05D1/36; C08F290/06; C09D123/02; C09D133/14

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2013/191104 A1 (KANSAI PAINT CO., LTD.) 27 December 2013 (2013-12-27) entire text | 1-13 |
| A | WO 2016/121242 A1 (KANSAI PAINT CO., LTD.) 04 August 2016 (2016-08-04) entire text | 1-13 |
| A | JP 2005-314530 A (DAINIPPON INK & CHEM INC) 10 November 2005 (2005-11-10) entire text | 1-13 |
| A | JP 63-256163 A (NEOS CO LTD) 24 October 1988 (1988-10-24) entire text | 1-13 |
| A | JP 2014-065262 A (TORAY IND INC) 17 April 2014 (2014-04-17) entire text | 1-13 |
| A | JP 2008-212906 A (TOPPAN PRINTING CO LTD) 18 September 2008 (2008-09-18) entire text | 1-13 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **24 August 2022** | **06 September 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2022/024592**

| Patent document cited in search report | Publication date (day/month/year) | Patent family member(s) | Publication date (day/month/year) |
|---|---|---|---|
| WO 2013/191104 A1 | 27 December 2013 | US 2015/0175833 A1<br>full text<br>EP 2862909 A1<br>CN 104718260 A | |
| WO 2016/121242 A1 | 04 August 2016 | US 2017/0355863 A1<br>full text<br>CA 2974184 A<br>CN 107207891 A | |
| JP 2005-314530 A | 10 November 2005 | (Family: none) | |
| JP 63-256163 A | 24 October 1988 | (Family: none) | |
| JP 2014-065262 A | 17 April 2014 | (Family: none) | |
| JP 2008-212906 A | 18 September 2008 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2007066827 A
- JP 2007302709 A
- WO 2013191104 A
- WO 2016121242 A